(19) Europäisches Patentamt

European Patent Office

Office européen des brevets

(11) **EP 0 872 090 B1**

(12) **EUROPÄISCHE PATENTSCHRIFT**

(45) Veröffentlichungstag und Bekanntmachung des Hinweises auf die Patenterteilung:
**26.03.2003   Patentblatt 2003/13**

(51) Int Cl.$^7$: **H04L 12/56**

(21) Anmeldenummer: **96942349.0**

(22) Anmeldetag: **04.12.1996**

(86) Internationale Anmeldenummer:
**PCT/EP96/05423**

(87) Internationale Veröffentlichungsnummer:
**WO 97/023978 (03.07.1997 Gazette 1997/29)**

(54) **VERFAHREN ZUM BILDEN VON LEITWEGINFORMATION**

METHOD OF FORMING ROUTING DATA

PROCEDE POUR ETABLIR DES INFORMATIONS D'ACHEMINEMENT

(84) Benannte Vertragsstaaten:
**AT BE CH DE DK ES FI FR GB IT LI NL PT SE**

(30) Priorität: **21.12.1995  EP 95120259**

(43) Veröffentlichungstag der Anmeldung:
**21.10.1998   Patentblatt 1998/43**

(73) Patentinhaber: **SIEMENS AKTIENGESELLSCHAFT
80333 München (DE)**

(72) Erfinder: **HUMMEL, Heinrich
D-85232 Günding (DE)**

(56) Entgegenhaltungen:
- **COMPUTER NETWORKS AND ISDN SYSTEMS, Bd. 12, Nr. 1, August 1986, AMSTERDAM NL, Seiten 27-37, XP002003894 A.E. BARATZ: "Establishing virtual circuits in large computer networks"**
- **COMPUTER COMMUNICATION REVIEW, Bd. 25, Nr. 2, April 1995, USA, Seiten 82-92, XP000570739 W.C. LEE: "Topology aggregation for hierarchical routing in ATM networks"**
- **IEEE JOURNAL ON SELECTED AREAS IN COMMUNICATION, Bd. 7, Nr. 8, Oktober 1989, NEW YORK US, Seiten 1243-1252, XP000126342 V.R. SAKSENA: "Topological analysis of packet networks"**
- **PROCEEDINGS OF INFOCOM '95 - CONFERENCE ON COMPUTER COMMUNICATIONS, FOURTEENTH ANNUAL JOINT CONFERENCE OF THE IEEE COMPUTER AND COMMUNICATIONS SOCIETIES, BOSTON APR. 2 - 6, 1995, Bd. 3, 2.April 1995, INSTITUTE OF ELECTRICAL AND ELECTRONICS ENGINEERS, Seiten 594-601, XP000580627 HUANG G M ET AL: "A NEW HAD ALGORITHM FOR OPTIMAL ROUTING OF HIERARCHICALLY STRUCTURED DATA NETWORKS"**

**Beschreibung**

Beim Routen von Verbindungen in Kommunikationsnetzen wie z.B. Schmalbandnetzen oder ATM-Netzen (ATM = asynchronous transfer mode) gibt es prinzipiell zwei alternative Vorgehensweisen, nämlich das "hop-by-hop-Routing", bei dem jeder Transitknoten selbst entscheidet, wie der Verbindungsaufbauwunsch weitergeleitet wird, und das "Source Routing", bei dem der Ursprungsknoten S wie "source node" (an dem der den Verbindungswunsch initierende Teilnehmer angeschlossen ist) der Verbindungsaufbaumeldung eine Wegbeschreibung mitgibt, welche von den Transitknoten zu befolgen ist, um so zum Zielknoten D wie "destination node" (an dem der gewünschte Zielverbindungsteilnehmer angeschlossen ist) zu gelangen. Diese Wegbeschreibungsinformation wird auch Leitweginformation oder Source Routing Information oder speziell bei ATM-PNNI-Netzen DTL-stack (=Stapel von Designated-Transit-List-Informationselemente) genannt.

Besagte ATM-Kommunikationsnetze können in zahlreiche Teilnetze ("Peer Groups"), bestehend aus physikalischen Vermittlungsknoten ("nodes") und physikalischen Verbindungsleitungen ("physical links") strukturiert sein. PNNI-Protokoll-gemäß bestimmen die Knoten einer (hierarchisch niedrigsten) Peer Group aus ihrer Mitte einen sogenannten Vertreterknoten ("Peer Group Leader"), der die gesamte Peer Group in Form eines einzigen, logischen, modellhaften Knotens ("logical group node" oder auch "parent node" genannt) in einer hierarchisch höheren Peer Group repräsentiert.

Es bildet sich eine hierarchisch höhere Peer Group, bestehend. aus mehreren derartigen parent nodes, sowie den diese modellhaft vernetzenden Verbindungsleitungen, wobei so eine modellhafte Verbindungsleitung (auch "higher-level logical link" genannt) zwischen zwei solchen parent nodes all jene physikalischen Verbindungsleitungen repräsentiert, welche je zwei physikalische Grenzknoten aus dem Hierarchiebereich der beiden benachbarten parent nodes verbinden, und dabei, dank administrativen Vorgaben und einem Übereinstimmungsalgorithmus, das jeweils selbige Kennzeichen, genannt Aggregation Token, zugeordnet bekommen haben.

Rekursiv kann sich die Hierarchie in weiteren Hierarchieebenen fortsetzen: Auch in der hierarchisch höheren Peer Group kann abermals eine Peer Group Leader Wahl stattfinden. Der dabei gewählte Peer Group Leader repräsentiert erneut den gesamten unter ihm aufgebauten Hierarchiebereich in einer hierarchisch nächst höheren Peer Group als wäre dieser Hierarchiebereich ein einziger Knoten. Auch in dieser Peer Group gibt es logische, modellhafte Verbindungsleitungen, die sich abermals, wie eben beschrieben, ergeben.

Vervollständigt wird ein PNNI-Protokoll-gemäße hierarchische modellhafte Netz (für die Anschauung: 3-dimensionales Gitter) durch die Hinzunahme von weiteren, rein logischen Verbindungsleitungen, den sogenannten "Uplinks", welche PNNI-Protokoll-gemäß je zwei Knoten (physikalisch - falls der Knoten am unteren Ende des Uplinks ein physikalischer Knoten ist - oder logisch) aus hierarchisch unterschiedlich hohen Peer Groups miteinander verbinden.

So führt vom Grenzknoten einer hierarchisch niedrigsten Peer Group, welcher über eine physikalische Verbindungsleitung mit einem Grenzknoten in einer benachbarten Peer Group verbunden ist, ein Uplink (des weiteren auch "initialer Uplink" genannt) zu einem Vertreterknoten, dem sogenannten "upnode", d.h. zu jenem Vertreterknoten "ancestor node" (d.h. parent node, bzw. "grandparent node", bzw. grand...grandparent node) des benachbarten Grenzknotens, welcher zu genau einem bestimmten ancestor node des diesseitigen Grenzknotens ein unmittelbarer Nachbarknoten in einer gemeinsamen hierarchisch höheren Peer Group ist. Ein derartiger (initialer) Uplink hat zur Folge, daß auch alle ancestor nodes (des diesseitigen Grenzknotens), welche jedoch je einer hierarchisch niedrigeren Peer Group angehören als besagte gemeinsame hierarchisch höhere Peer Group, je einen Uplink (des weiteren auch "induzierter Uplink" genannt) zu besagtem upnode dem Hierarchiebild beisteuern.

Die hierarchische Strukturierung, welche letztlich auf entsprechenden Konfigurierungsdaten der einzelnen Knoten beruht, kann dabei sehr flexibel gehandhabt werden. Insbesondere können die einzelnen Knoten einer grand... grandparent Peer Group unterschiedlich viele Subhierarchieebenen samt diesbezüglichen Peer Groups haben.

Der PNNI-Protokoll-gemäße Austausch von Datenpaketen, "Hello-Packets" sowie PNNI-Topologie-Status-Datenpaketen ("PNNI-Topology-State-Packets" - PTSPs) über sogenannte Leitwegkontrollkanäle ("Routing-Control-Channels") sorgt dafür, daß jeder physikalische Vermittlungsknoten einer hierarchisch niedrigsten Peer Group dasselbe Wissen bezüglich der Topologie dieser und aller in der Hierarchie darüber befindlichen hierarchisch höheren Peer Groups inklusive aller Uplinks, ferner dasselbe Wissen bezüglich der Belegungsauslastung aller darin enthaltenen Knoten und Verbindungsleitungen sowie dasselbe Wissen bezüglich deren Eigenschaften (Erreichbarkeit, Fähigkeiten, Merkmale, Kosten) erwirbt.

Das erworbene Topologiewissen läßt sich in Form eines Graphen G1 in einem Knoten abspeichern. In ihm sei der jeweils aktuelle Vermittlungsknoten (der, der diesen Graphen G1 für sich erstellt hat) als Ursprungsknoten S besonders markiert.

Äußert nun ein am Ursprungsknoten angeschlossenes Endgerät den Wunsch, mit dem Endgerät einer gewissen Zieladresse verbunden zu werden, so gestatten die per PNNI-Routing-Protokoll ausgetauschten Daten im Graphen G1 jenen Zielknoten D zu bestimmen, welcher die Erreichbarkeit des zielendgeräts proklamiert und dabei der hierarchisch niedrigst möglichen Peer Group angehört. Ausgehend vom Graphen G1 ist eine, im Sinne eines geeigneten Minimierungskriterium, beste Route vom Startknoten S hin zum Zielknoten D zu ermitteln.

Das ATM Forum Technical Committee Private Network-Node-Interface (PNNI) in der Spezifikation, Version 1.0, Anhang H sieht dabei jedoch nicht die Möglichkeit vor, auch vorteilhafte Umwege über ein oder mehrere Peer Groups mit Rückkehr zur bereits passierten Peer Group in die Leitwegsuche einzubeziehen, dadurch ist es mitunter nicht möglich eine Vermittlungsanforderung entsprechend zu erfüllen.

In anderen Kommunikationsnetzen, beispielsweise Schmalbandnetzen mit Sourcerouting zur Realisierung von PSTN (public switched telephone network), treten ebenfalls diese Probleme auf. Die Topologieinformationen werden lediglich dahingehend ausgewertet, daß Leitwege unter Vermeidung von Umwegen ermittelt werden.

Die Aufgabe des erfindungsgemäßen Verfahrens besteht nun darin, unter Beachtung der Topologieinformation und der Kommunikationsbedingungen bezüglich der Knoten und Verbindungsleitungen einen Leitweg zu ermitteln und in eine Leitweginformation derart umzusetzen, daß eine größtmögliche Vielfalt von Leitwegen berücksichtigt werden kann. Die Aufgabe wird durch das Verfahren mit den Merkmalen des Patentanspruchs 1 gelöst.

Die Vermittlungsknoten sind Teilnetzen zugeordnet und beliebig miteinander vernetzt. Die Teilnetze können dabei einzelne lokale Kommunikationsnetze unterschiedlicher Betreiber oder Gruppen von Vermittlungsknoten eines übergreifenden Kommunikationsnetzes sein. In einem Ursprungs-Vermittlungsknoten sind Topologieinformationen über das eigene Teilnetz und die Vernetzung der Teilnetze verfügbar, die im Knoten oder einem Routing-Server gespeichert sind. Weiterhin liegen dem Urspungs-Vermittlungsknoten die für die aufzubauende Kommunikationsverbindung geforderten Kommunikat ionsbedingungen vor.

Bezugnehmend auf die Topologieinformationen wird eine den Kommunikationsbedingungen genügende Teilmenge von Vermittlungsknoten und Verbindungsleitungen ausgewählt und ein Leitweg zum Ziel-Vermittlungsknoten ermittelt. Dabei wird ein Leitweg eingeschlossen, der in Richtung vom Ursprungs- zum Ziel-Vermittlungsknoten mindestens ein Teilnetz einmal verläßt und im weiteren Verlauf des Leitwegs wieder in dieses Teilnetz zurückkehrt. Die Leitweginformation wird anschliessend aus dem ermittelten Leitweg gebildet. Das Bilden der Leitweginformation wird entweder im Vermittlungsknoten selbst oder mit dem Vermittlungsknoten verbinderbaren externen Vorrichtungen, z. B. Routing-Servern durchgeführt. Das erfindungsgemäße Verfahren kann beispielsweise in den Vermittlungsknoten Xpress der Siemens AG implementiert werden.

Ausgehend von einem Topologiegraphen, der z.B. auf den durch das PNNI-Routing Protokoll gewonnenen Topologieinformationen beruht, wird ein eventuell reduzierter Topologiegraph abgeleitet, daß die verbliebenen Knoten und Kanten u.a. den Bedingungen des aktuellen Verbindungswunsches genügen. Es wird darauf geachtet, daß der Topologiegraph nicht zusehr reduziert wird, so daß Umwege ermöglicht werden, bei denen Knoten und Kanten passiert werden könnten, welche einer höherem Hierarchieebene angehören als der Zielknotens D.

Es ergibt ein darauf durchgeführte Routing-Algorithmus eine Route, welche Umwege über andere Teilnetze macht, so ist sie im Sinne des angewandten Minimierungskriteriums die momentan beste Route - etwa weil aufgrund der momentanen Netzbelastung keine umweglose Routen möglich sind, oder falls doch, ungünstiger sind. Letzteres ist insbesondere dann wahrscheinlich, wenn die Netze/Teilnetze (Peer Groups) aufgrund von organisatorischen Gesichtspunkten (Besitzer. Abteilungen, ..) gebildet sind, geografisch aber denselben Raum überdecken.

Eine nach dieser Leitweginformation aufgebaute Kommunikationsverbindung umfaßt durchaus auch Umwege, die vermeidbar wären, wenn innerhalb eines Teilnetzes ein direkter Leitweg unter Einhaltung der Kommunikationsbedingungen möglich wäre. Durch das erfindungsgemäße Verfahren läßt sich jedoch eine Blockierung innerhalb des Teilnetzes umgehen. Die Anzahl erlaubter Leitwege wird wesentlich erweitert und den Betreibern des Kommunikationsnetzes erweiterte Gestaltungsmöglichkeiten, durch die Nutzung zusätzlicher Teilnetze bei einem Verbindungsaufbau eröffnet.

Zur vorteilhaften Ausgestaltung der Erfindung gehört die freiwillige Einschränkung des potentiellen Umwegausmaßes. Hierbei werden vorteilhafterweise höchste Peer Groups quasi freiwillig aus dem Topologiegraph entfernt. Dieser Aspekt ist wichtig, wenn private und öffentliche Netze eine gemeinsame Hierarchie bilden und etwa aus Kostengründen der Umweg über öffentliche Netze verhindert werden soll.

Die Vermittlungsknoten bzw. Teilnetze sind vorteilhafterweise als Schmalbandnetz oder ATM-Netz ausgebildet. Das erfindungsgemäße Verfahren kann jedoch auch auf Mischformen von Kommunikationsnetzen angewendet werden, so dass nur Teile des Kommunikationsnetzes derartig ausgebildet sind.

Eine besonders einfache Implementierung des erfindungsgemäßen Verfahrens ergibt sich, wenn zumindest ein Teil der Vermittlungsknoten nach den Prinzipien des Privaten-Netzwerk-Knoten-Protokolls (PNNI) operieren. Die Vermittlungsknoten eines Teilnetzes sind dabei durch einen komplexen Vermittlungsknoten in den Topologieinformationen repräsentiert. Die hierarchische Gliederung von Teilen des Kommunikationsnetzes wird dadurch erleichtert. Es ergibt sich zudem eine Aufwandsreduktion bei der Leitwegermittelung, die vorteilhafterweise nach dem Dijkstra-Algorithmus erfolgt.

Nach einer weiteren vorteilhaften Ausgestaltung des erfindungsgemäßen Verfahrens werden die Verbindungsleitungen zwischen zwei Vermittlungsknoten in beide Verkehrsrichtungen getrennt behandelt. Dies geschieht, indem beispielsweise jede ungerichtete Kante durch je zwei entgegengesetzt gerichtete Kanten ersetzt wird, wobei jeder einzelnen gerichteten Kante sowohl Vorwärts-als auch Rückwärts-Attribute zugeordnet werden.

Damit kann die eine gerichtete Kante im Topologiegraphen verbleiben während die entgegengerichtete Kante entfernt wird, falls die Kommunikationsanforderungen derart sind, daß der Verbindungsaufbau nur in der einen Richtung ermöglich sind. Hierbei wird zu jedem Uplink ein entgegengerichteter Downlink in den Topologiegraphen aufgenommen. Andererseits wird beim Dijkstra-Routing-Algorithmus dafür gesorgt, daß stets nur monoton gerichtete Kantenfolgen als Routen resultieren.

Damit kann eine Verbindungsleitung, beim Verbindungsaufbau in der einen Richtung passiert werden, auch wenn in die andere Richtung bestimmte Kommunikationsbedingungen nicht erfüllt sind.

Beim Nichterfüllen der Kommunikationsbedingungen durch einen Vermittlungsknoten oder eine Verbindungsleitung, beispielsweise mit der Folge der Unmöglichkeit eines Verbindungsaufbaus über den zuvor ermittelten Leitweg oder eines Verbindungsabbaus, wird der betreffende Vermittlungsknoten bzw. die betreffende Verbindungsleitung dem Ursprungs-Vermittlungsknoten oder einem Anfangs-Vermittlungsknoten des entsprechenden Teilnetzes gemeldet, worauf dieser eine erneute Leitwegermittlung vornehmen kann.

Bei der Leitwegermittlung werden nach Weiterbildungen der Erfindung die Routen mit den kürzesten Verbindungsleitungen oder der geringsten Anzahl von zu passierenden Vermittlungsknoten gewählt. Dabei kann gegebenenfalls auf geografische Angaben zu den Vermittlungsknoten zurückgegriffen werden. Falls die Topologieinformationen vorteilhafterweise kostenbezogene Informationen enthalten, dann wird der Leitweg mit den geringsten Kosten gewählt. Bei der Auswahl des günstigsten Leitweges können also folgende Minimierungskriterien einzeln oder kombiniert berücksichtigt werden:

- Anzahl zu passierender Knoten,
- Summe der Distanzen zischen den zu passierenden Knoten,
- Verzögerungszeit der Übertragung (Cell Tranfer Delay),
- Variantion der Verzögerungszeit der Übertragung (Cell Delay Variation),
- Kosten für Übertragung.

Die Erfindung wird im folgenden bezugnehmend auf zeichnerische Darstellungen anhand von Ausführungsbeispielen näher erläutert.

Dabei zeigen

1. Ausführungsbeispiel

Figur 1    ein ATM-Kommunikationsnetz aus der Sicht des Ursprungs-Vermittlungsknotens A.1,
Figur 2    ein ATM-Kommunikationsnetz aus der Sicht des Transitvermittlungsknotens B.2 und
Figur 3    ein ATM-Kommunikationsnetz aus der Sicht des weiteren Transit-Vermittlungsknotens C.1.

2. Ausführungsbeispiel

Figur 4    eine Netztopologie eines ATM-Kommunikationsnetzes,
Figur 10    durch komplexe Knoten repräsentierte Netztopologie,
Figur 11    einen Topologiegraph für einen Knoten des Teilnetzes A,

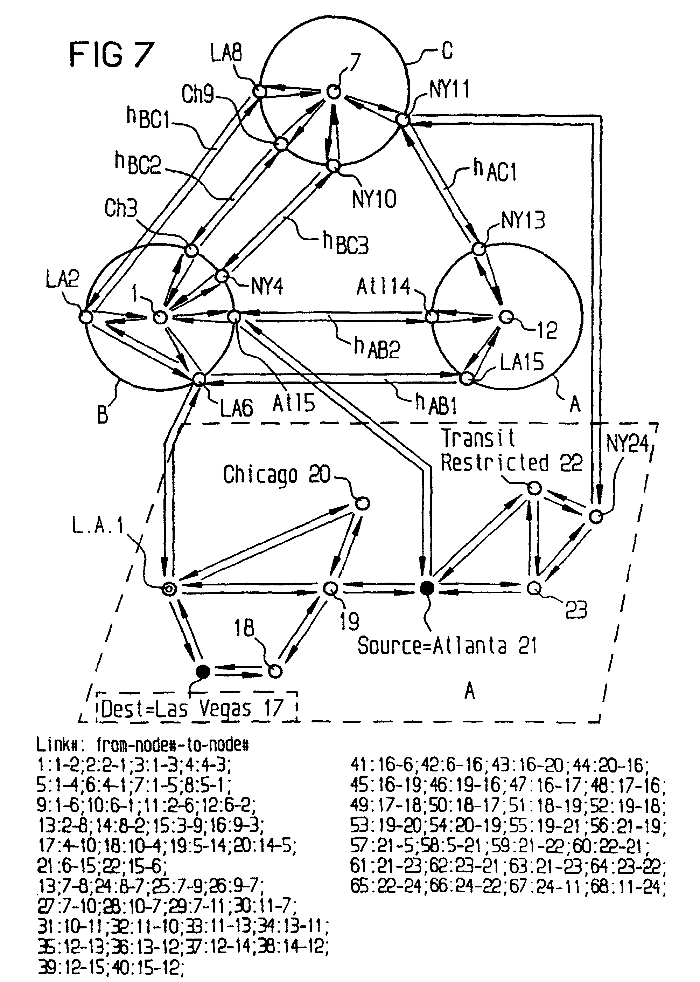

Figur 7    einen Topologiegraph für einen Knoten des Teilnetzes A mit unabhängigen Verkehrsrichtungen,

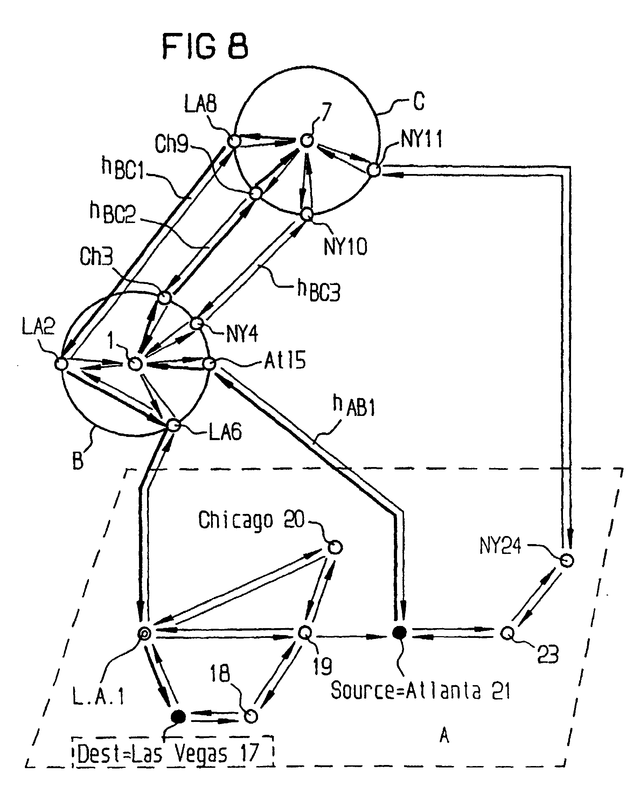

Figur 8    einen ermittelten Leitweg.

3. Ausführungsbeispiel

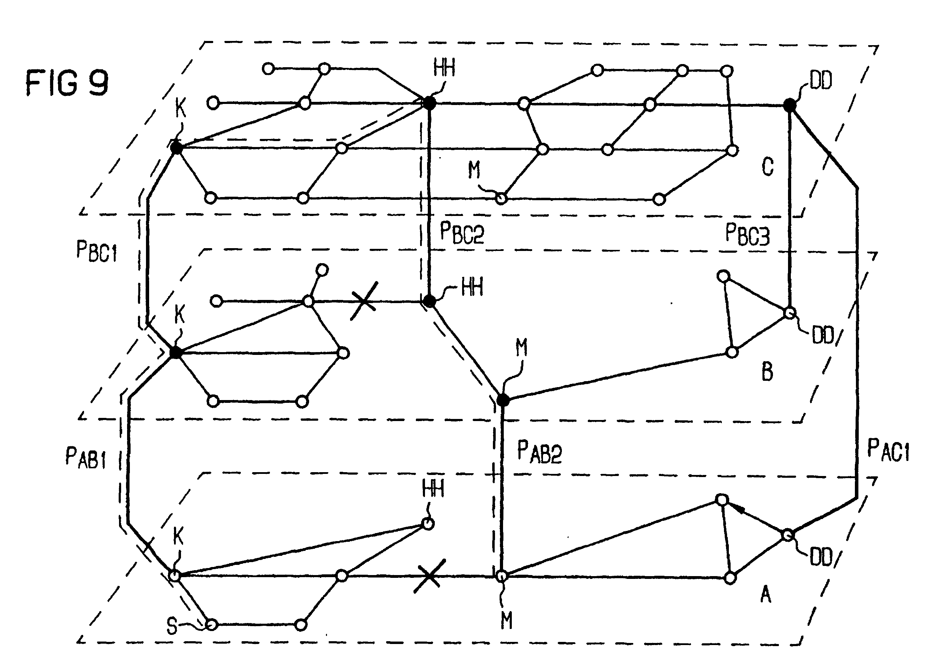

Figur 9    eine Netztopologie eines Schmalband-Kommunika tionsnetzes,

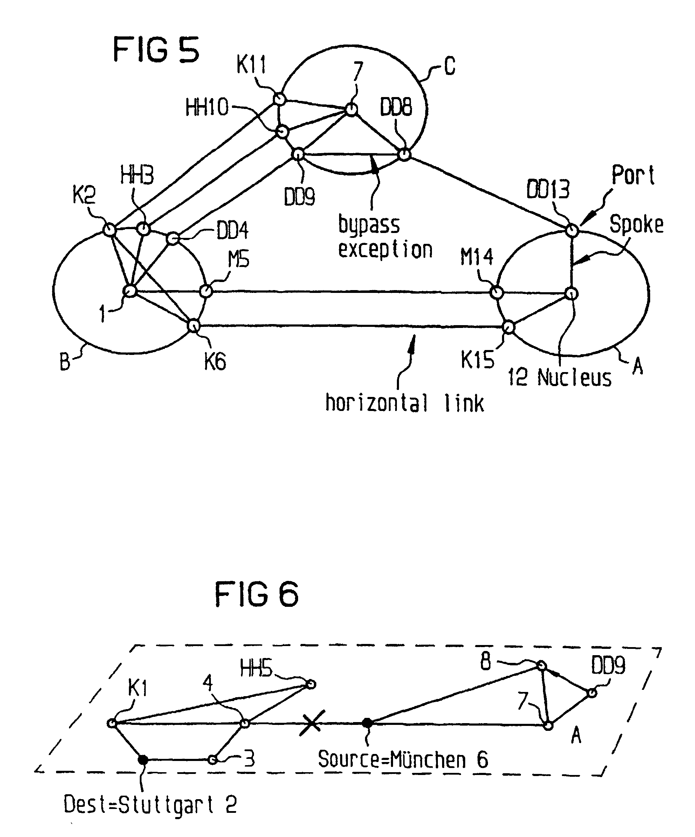

Figur 5    durch komplexe Knoten repräsentierte Netztopologie,
Figur 6    einen Topologiegraph für einen Knoten des Teilnetzes A,

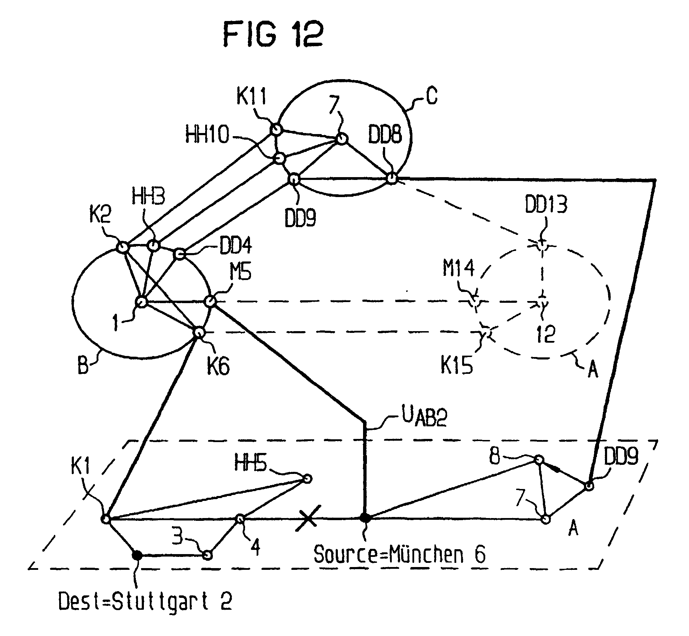

Figur 12    einen Topologiegraph für einen Knoten des Teilnetzes A mit unabhängigen Verkehrsrichtungen,

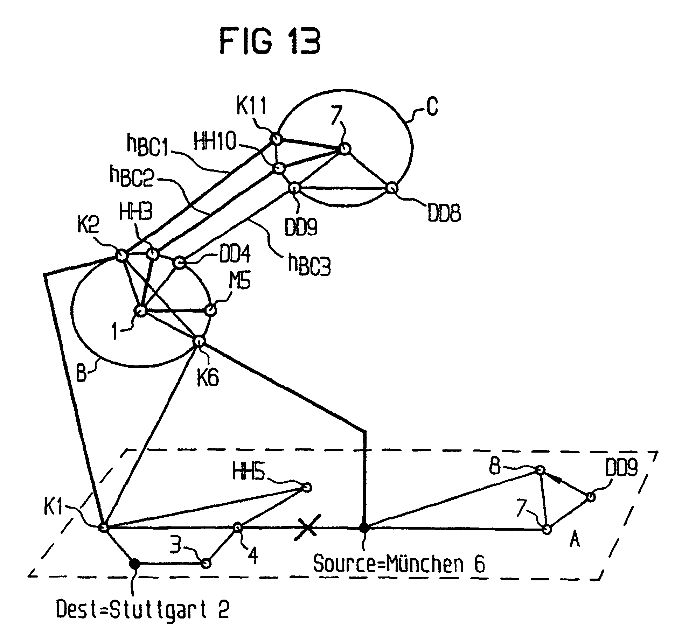

Figur 13    einen ermittelten Leitweg.

1. Ausführungsbeispiel (PNNI-Netz mit nur einfachen Knoten):

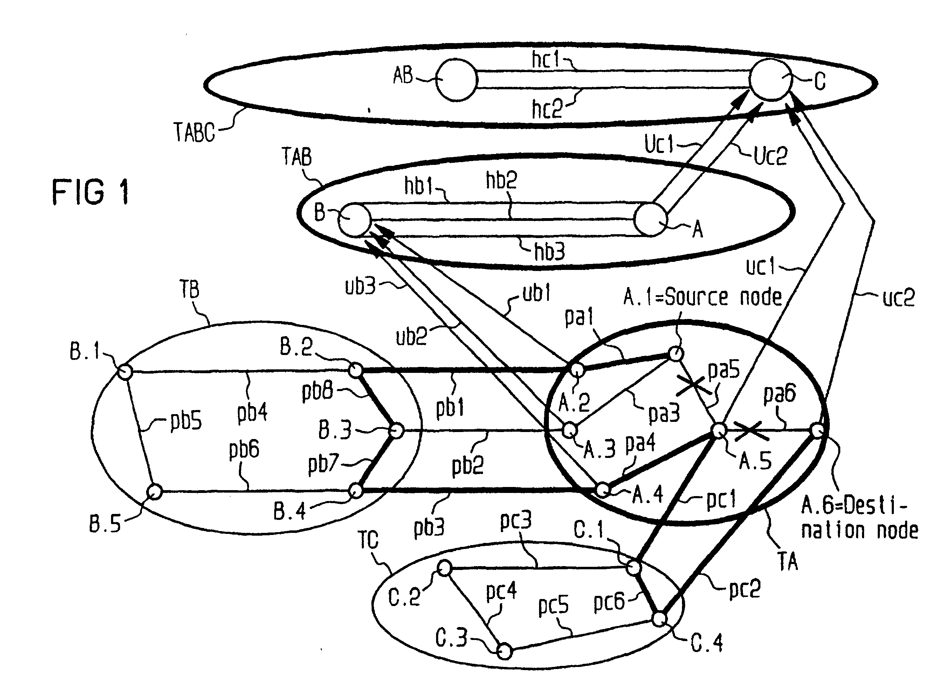

In einem ersten Ausführungsbeispiel (Figuren 1 bis 3) wird bezugnehmend auf anfangs geschildertes Szenario eines ATM-Kommunikationsnetzes ein Graph G2 bestimmt, der aus dem dem genannten Graphen G1 hervorgeht, indem all jene Knoten und Verbindungsleitungen aus dem Graphen G1 entfernt werden, welche den Kommunikationsbedingungen nicht standhalten.

Anschließend wird ein optimaler Verbindungsweg derart bestimmt, daß Umwege über hierarchisch höhere Peer Groups mit anschließender Rückkehr zu bereits passierten hierarchisch niedrigeren Peer Groups mitberücksichtigt werden. Dabei sind die Austrittsknoten und Wiedereintrittsknoten bei ein und derselben Peer Group unterschiedlich, sonst würde solch ein Umweg ein höchst überflüssige Schleife und keinen optimalen Verbindungsweg darstellen.

Auch wenn sich nachfolgendes Ausführungsbeispiel auf umwegartige Leitwege ("Routen") konzentriert, so darf nicht übersehen werden, daß das erfindungsgemäße Verfahren auch für den Normalfall, bei dem eine beste, umweglose Route zur Verfügung steht, diese auch findet und für sie ebenso korrekt die entsprechende Leitweginformation bildet.

Die sich ergebende optimale Route kann prinzipiell beliebig viele Übergänge von einer hierarchisch höheren zu einer hierarchisch niedrigeren Peer Group und umgekehrt von einer hierarchisch niedrigeren zu einer hierarchisch höheren Peer Group enthalten, wobei bei jedem einzelnen Übergang prinzipiell beliebig viele, d.h. null, eins, zwei,... oder n <=102 Hierarchieebenen übersprungen werden dürfen.

PNNI-Protokoll-gemäß wird der Verbindungsaufbaumeldung die Leitweginformation als Folge von Informationselementen, sogenannten "Designated-Transit-List-Informationselementen (DTLs)" mitgegeben, wobei ein vorausgehendes Informationselement (Repeat-Indicator) Informationselement auf die Kellerspeicher-(stack)-artige Handhabung dieser DTLs (Pushund Pop-Operationen) hinweist. Dabei enthält jedes Informationselement DTL die Beschreibung von genau einer Route durch genau eine hierarchische Peer Group in Form von einem oder mehreren Knoten-Link(später auch als Kante bezeichnet)-Paar Angaben sowie einem Zeiger, der auf eines dieser Knoten-Link-Paare deutet.

Die vom obersten Informationselement DTL des Kellerspeichers beschriebene Route beginnt dabei mit dem Ursprungsknoten S und enthält nur Angaben bezüglich Knoten und Verbindungsleitungen in der hierarchisch niedrigsten Peer Group und endet gegebenenfalls mit der Angabe eines Uplinks, der zu einem upnode führt, bei dem die Route sich fortsetzt, und zwar so, wie sie im nächst-tiefer gekellerten DTL beschrieben ist.

Jedes nächst-tiefer im Kellerspeicher befindliche DTL enthält Angaben für je eine Route durch die hierarchisch nächsthöhere Peer Group, wobei sie mit der Angabe des diesbezüglichen ancestor nodes des Ursprungsknotens beginnen, eventuell gefolgt von weiteren Knoten- und Verbindungsleitungsangaben aus selbiger Peer Group und eventueller Uplink-Angabe als Abschluß. Das stack-tiefste DTL enthält Angaben bezüglich einer Route durch die hierarchisch höchste benötigte Peer Group, beginnend mit der Angabe des diesbezüglichen ancestor nodes des Ursprungsknotens und endend bei einem Knoten, in dessen Hierarchiebereich sich der Zielknoten mit dem angeschlossenen Zielendgerät befindet.

Die beschriebene PNNI-Protokoll-gemäße Gestaltung des DTL-Kellerspeichers erweckt zunächst den Anschein, als könnten Leitwege, welche aus beliebigen Folgen von hierarchisch höheren und hierarchisch niedrigeren Knoten bestehen, nicht berücksichtigt werden, und daß es wohl angezeigt wäre, den Algorithmus für die Suche eines optimalen Verbindungsweges derart zu gestalten, daß Routen mit derartigen Folgen (sprich mit Umwegen über hierarchisch höhere Peer Groups) von vornherein ausscheiden, wie es in der Spezifikations des PNNI-Protokolls, Version 1.0, Anhang H der Fall ist.

Das erfindungsgemäße Verfahren löst jedoch das Problem eine umwegebehaftete Route in einer Form zu beschreiben, daß den PNNI-Protokoll-gernäßen Vorschriften Genüge getan wird.

Charakteristisch für die Lösung des ersten Ausführungsbeispiels ist es, daß aus einer vorgegebenen Folge von hierarchisch höheren und hierarchisch niedrigeren Knoten, in welcher Uplinks durchaus auch in Abwärtsrichtung zu passieren wären, eine äquivalente Folge von Knoten und Verbindungsleitungen abgeleitet wird, welche hinsichtlich der Hierachieebenen dieser Knoten niemals absteigend verläuft, bei der also Uplinks niemals in Abwärtsrichtung zu passieren sind. Als Tribut des dadurch Erreichten kann ein und derselbe hierarchisch höhere (logische) Knoten mehrfach in der Folge auftreten (Schleifen), jedoch wird aufgrund der angegebenen Verbindungsleitungen eindeutig dafür gesorgt, daß die Austritts- und Wiedereintrittsgrenzknoten in den diesbezüglichen Child Peer Groups stets verschieden sind, was letztlich bedeutet, daß ein und derselbe physikalische Knoten niemals öfter als einmal passiert wird.

Im folgenden wird die Bestimmung der besten Route in einem den Leitweg und die Leitweginformation bestimmenden Vermittlungsknoten für das erste Ausführungsbeispiel erläutert:

Vom oben genannten Graphen G2 wird ein Graph G3 abgeleitet, indem sämtliche ancestor nodes des Ursprungsknotens S entfernt werden, ebenso sämtliche (horizontale) von diesen wegführende Verbindungsleitungen, welche von eben diesen ancestor nodes zu deren Nachbarknoten in den entsprechenden hierarchisch höheren Peer Groups führen würden, sowie sämtliche von diesen ancestor nodes in Aufwärtsrichtung wegführenden induzierten Uplinks.

Gemäß dem PNNI-Protokoll wird z.B. mit Hilfe des Dijkstra-Routing-Algorithmus eine beste Route vom Ursprungsknoten S hin zum Zielknoten D basierend auf dem Graphen G3 auf bekannte Weise ermittelt, wobei die im Graphen G3 verbliebenen Uplinks nicht anders als alle anderen (horizontalen) Verbindungsleitungen zu behandeln sind.

Als beste Route ergibt sich eine Folge F1 in allgemeiner Notation:

node-n(=D), link-n-1,..,node-i+1, link-i,..,link-1, node-1(=S).

Es liegt in der Natur des Dijkstra-Routing-Algorithmus, daß nicht nur zu einem einzigen, bestimmten Zielknoten D, sondern zu allen Knoten des Netzes die jeweils beste Route ermittelt wird, von denen man sich im nachhinein die interessierende Route etwa zum Zielknoten D heraussucht. Durch den Dijkstra-Algorithmus wird dabei zunächst diese Route in der Form der Folge F1 bestimmt.

Anschließend dreht man die Reihenfolge um und bildet die Folge F2:

node-1(=S),link-1,..,link-i, node-i+1,.., link-n-1, node-n(=D).

Der physikalische Ursprungsknoten node-1=S ist naturgemäß von hierarchisch niedrigster Ebene. Alle anderen Knoten dürfen erfindungsgemäß der Reihe nach beliebig oft hierachisch höhere oder hierarchisch niedrigere physikalische oder logische Knoten sein. Insbesondere muß der Zielknoten node-n=D nicht unbedingt der hierarchisch höchste unter den in der Folge vorkommenden Knoten sein.

Ein Link link-i erweist sich als horizontal wenn node-i und node-i+1 der gleichen Hierarchieebene zugeordnet sind, sprich zur selben hierarchischen Peer Group gehören. Ein Link link-i erweist sich als Uplink in Aufwärtsrichtung (respektive Abwärtsrichtung) wenn die Hierarchieebene von Knoten node-i kleiner (respektive größer) als die Hierarchieebene von Knoten node-i+1 ist.

Aus der Folge F2 wird erfindungsgemäß eine Folge F3 abgeleitet, bei der die Knoten in der vorgegebenen Reihenfolge hinsichtlich ihrer Hierarchieebene niemals absteigen. Vermittlungsknoten nodes und Links von F2 werden dabei ggf. durch andere ersetzt oder gestrichen. Man verwende hierzu eine Hilfsvariable, hier genannt CurrentMode-Level, welche man mit dem Hierarchielevel des Knotens node-1=S initialisiert, sowie eine zweite boolsche Hilfsvariable, hier genannt BelowHighestReachedLevel, welche man mit FALSE initialisiert.

In einer Iterationsschleife durchläuft man, beginnend bei Ursprungsknoten node-1=S, sämtliche Komponenten der Folge F2 (die links und die nodes) und nimmt mitunter Ersetzungen oder Streichungen vor - siehe nachfolgender Algorithmus:

```
- - - - - - - - - - - - - - - - - - - - - - - - - - - - - - - - - - - - - - - - - - - - - - - - - - - - - - -
BelowHighestReachedLevel := FALSE;
current_node := node-1; //d.h. = Source Node S
       `
```

```
CurrentNodeLevel := Hierarchieebene des current_node;

for i:=1 step 1 to n-1 do
  if  Hierarchielevel des node-i+1 niedriger als
      CurrentNodeLevel then
      if BelowHighestReachedLevel = FALSE then
          Bestimme jenen ancestor node von node-i+1, dessen
          Hierarchieebene gleich dem CurrentNodeLevel ist.
          Ersetze link-i, welcher ein in Abwärtsrichtung.
          passierter Uplink ist,durch den zugehörigen
          horizontalen Link (mit selbigem Aggregation Token).
          Wie dies gemacht werden kann: Siehe Teilaufgabe-1
          im Anschluß an diesen Algorithmus.
          Ersetze node i+1 durch den ermittelten ancestor
          node.
          BelowHighestReachedLevel:= TRUE;
      else
          Streiche link-i und node-i+1 aus der Folge.
      end
  else
      if BelowHighestReachedLevel = TRUE then
          Ersetze link-i durch jenen zugeordneten
          (induzierten) Uplink oder aber horizontalen
          Link,welcher vom Level gegeben durch
          CurrentNodeLevel aus startet und hinführt zum node-
          i+1. Wie dies gemacht werden kann: Siehe
          Teilaufgabe-2 im Anschluß an diesen Algorithmus.
          Es wird node-i+1 unverändert in der Folge
          beibehalten.
          BelowHighestReachedLevel:= FALSE;
      else
          Beibehalte link-i und node-i+1 unverändert in der
          Folge.
      end
      CurrentNodeLevel:= Level des node-i+1;
  end
```

```
Next i;
-------------------------------------------------------------------------
```

Teilaufgabe-1:

Zu einem vorgegebenen Uplink ist der zugehörige horizontale Link in der hierarchisch höheren Peer Group zu bestimmen:

Der Graph G1 hat m Links (horizontale Links und Uplinks zusammengenommen). Die Zahl k aus der Menge 1,2,...,m stellt einen Zeiger auf die interessanten Informationen bezüglich genau eines Links dar (z.B. seine Identitätsangaben). Insbesondere existiere eine Tabelle RelationTbl mit m Elementen. Die Elemente repräsentieren die Zuordnungskette vom initialen Uplink zum eventuell induzierten Uplink, zum eventuell daraus erneut induzierten Uplink, usw., zum daraus induzierten horizontalen Link in einer hierarchisch höheren Peer Group:

```
RelationTbl[j₁] := j₂; // falls es keinen Wert k von 1 bis m
                          gibt mit RelationTbl(k):=j₁ so ist
                          j₁ initialer Uplink
RelationTbl[jq-1] := jq;
......
RelationTbl[jr-1] := jr;
......
RelationTbl[js-1] := js;
RelationTbl[js] := 0;
```

was bedeutet:

link- $j_1$ ist Uplink und induziert link- $j_2$
link- $j_{r-1}$ ist Uplink und induziert link- $j_r$
link- $j_{s-1}$ ist Uplink und induziert link- $j_s$
link- $j_s$ ist horizontaler Link.
// Falls es keinen Wert $j_{s-1}$ von 1 bis m gibt mit RelationTbl $(j_{s-1})$ :=$j_s$ , wohl aber einen Eintrag RelationTbl[$j_s$] := 0;
so ist $j_s$ ein horizontaler Link in einer hierarchisch niedrigsten Peer Group.

Angenommen der zu ersetzende link-i entspricht $j_{q-1}$, so wird die Tabelle RelationTbl durchlaufen, bis man auf RelationTbl[$j_s$] := 0 trifft. $j_s$ kennzeichnet den einzusetzenden horizontalen Link.

Teilaufgabe-2:

Es gibt für alle m Links des Graphen G1 eine Tabelle der Art: LinkLevelTbl[k]=niedrigster Hierarchielevel der beiden Begrenzungsknoten des Links k; für alle k=1,..,m. link-i ist durch $j_{q-1}$ bezeichnet. Es wird die Tabelle RelationTbl ab RelationTbl [ $j_{q-1}$] durchlaufen, um von einem Link zum nächsten Link zu kommen und es wird dabei stets CurrentNodeLevel mit den Eintragungen in LinkLevelTbl verglichen. Angenommen, der Wert von CurrentNodeLevel sei gleich dem Wert von Link-LevelTh1[$j_{r-1}$], so identifiziert $j_{r-1}$ den gesuchten Link, welcher link-i ersetzen soll.

Aus der Folge F3 bilde man eine Folge F4 z.B. wie folgt:

```
for i:= 1 step 1 to n-1 do
    if link-i = Uplink then
            Füge hinter link-i jenen ancestor node von Source
            Node S ein, der vom selben Hierarchielevel ist
            wie node-i+1. Füge wiederum dahinter jenen
            horizontalen Link H, welcher dem link-i vermöge
            des identischen Aggregation Tokens zugeordnet ist
            (man durchlaufe die RelationTbl beginnend bei j₁ =
            link-i und finde H= j₈).
    end
next i;
```

Aus F4 bilde man eine Sequenz von DTLs, indem man die Folge F3 hinter jedem Uplink zerstückelt und aus jeder so erzeugten Teilfolge ein DTL Informationselement von PNNI-Protokoll-gerechter Syntax bildet - womit die erfindungsgemäße Aufgabe für den Ursprungsknoten S vollkommen beschrieben ist.

Erfindungsgemäß kann die Einbeziehung einer Schleife (im Sinne des erfindungsgemäßen Verfahrens ein Umweg über ein oder mehrere Peer Groups mit Rückkehr zu einer bereits passierten Peer Group an einem noch nicht passierten Wiedereintrittsknoten) auch beim Wiederauffüllen der Informationselemente der Leitweginformation bei Ankunft der Verbindungsaufbaumeldung in einem zu passierenden physikalischen Vermittlungsknoten (Transitknoten) erfolgen. Dies wird im folgenden anhand des Eintreffens einer Verbindungsaufbaumeldung im ersten physikalischen Vermittlungsknoten einer hierarchisch niedrigsten Peer Group verdeutlicht:

Wenn beim Weiterleiten einer Verbindungsaufbaumeldung die momentane hierarchisch niedrigste Peer Group verlassen wird, so muß zuvor das diesbezügliche, stack-oberste DTL entfernt werden. Wird gar ein gewisser Hierarchiebereich verlassen, so müssen zuvor all jene stack-obersten Informationselemente DTL entfernt werden, welche Routenabschnitte durch die jeweiligen Peer Groups des zu verlassenden Hierarchiebereichs enthalten. Wenn beim Weiterleiten einer Verbindungsaufbaumeldung eine hierarchisch niedrigste Peer Group neu betreten wird, so müssen neue Routenabschnitte ermittelt und neue diesbezügliche DTLs gebildet werden. Die Zeiger in den einzelnen DTLs müssen stets so gesetzt bzw. vorgerückt werden, daß beim Empfang einer Verbindungsaufbaumeldung die Zeiger aller empfangenen DTLs je auf ein Knoten-Link-Paar deuten, welches entweder den empfangenden physikalische, hierarchisch niedrigste Knoten oder aber einen seiner ancestor nodes beinhaltet.

Der Grenzknoten (S'), als Eintrittsknoten in eine weitere Peer Group bestimmt einen neuen besten Routenabschnitt bis hin zu einem Zielknoten D'. Der Zielknoten D' ist dem Knoten-Link-Paar zu entnehmen, welches dem Knoten-Link-Paar im stack-obersten der empfangenen DTLs nachfolgt, auf welches der diesbezügliche Zeiger zeigt.

Falls dies nicht möglich ist, weil der Zeiger bereits auf das letzte Knoten-Link-Paar deutet, so gilt selbiges bezogen auf das nächst-tiefer im stack befindliche DTL, usw. Es ist im Sinne der Erfindung, daß das PNNI-Protokoll vorschreibt, daß auch der empfangenen Link-Angabe, nämlich wie man zum Knoten Knoten D' kommt, voll und ganz entsprochen werden muß. Jeder Versuch etwa, noch besser dorthin zu gelangen, könnte zwar einen besseren Routenabschnitt erbringen, zugleich aber auch dazu führen, daß der vom Zielknoten D' repräsentierte Hierarchiebereich nicht am vorgesehenen Grenzknoten betreten wird, von wo aus die Fortsetzung des Verbindungsaufbaus in einer Sackgasse enden könnte. D.h. es wird zusätzlich zu D' auch noch der horizontale Link Link-to-D' bestimmt. Man entnimmt Link-to-D' dem Knoten-Link-Paar, welches dem jenigen DTL angehört, in welchem sich D' befindet und auf welches der diesbezügliche Zeiger beim Empfang des DTLs zeigt.

Der Grenzknoten S', der beachtet, daß er für den vorliegenden Verbindungsaufbauwunsch nur ein Transitknoten ist und daß der empfangene DTL Kellerspeicher unvollständig ist, bildet daher von seinem eigenen Graphen G1 ausgehend einen eventuell reduzierten Graphen G1' wie folgt:

Vom Graphen G1 werden alle Knoten - samt angrenzender Links mit einer Hierarchieebene größer oder gleich der Hierarchieebene des Knoten D' entfernt, nicht aber D' selbst und auch nicht jene Uplinks, für die D' Upnode ist und dabei dem Link-to-D' zugeordnet sind. D.h. für alle Uplinks, welche D' als Upnode haben, mache man folgende Prüfung:

Wie in Teilaufgabe-1 ist einem Uplink ein $j_{q-1}$ zuordenbar. Man durchlaufe die Tabelle RelationTbl ausgehend von Relation-Tb1[$j_{q-1}$] bis man auf einen Eintrag RelationTbl[$j_s$] := 0 trifft. Falls $j_s$ dem Link-to-D' entspricht, so darf der Uplink im Graphen G1' verbleiben. Andernfalls wird er entfernt.

Von G1' ausgehend werden die Graphen G2' und G3' gebildet, ganz analog wie der Ursprungsknoten S die Graphen G2' und G3' gebildet hat, und wie oben beschrieben ein DTL-stack bestimmt wird, wobei S' die Funktion von S und D' die Funktion von D übernimmt (siehe obige Beschreibung).

Vom resultierenden DTL-Kellerspeicher werden sämtliche DTLs mit Ausnahme des allerletzten (welches D' enthält) übernommen und damit der weiterzuleitende DTL- Kellerspeicher vervollständigt.

Anhand der Figuren 1 bis 3 wird die Bildung der Leitweginformation in Vermittlungsknoten eines dargestellten ATM-Kommunikationsnetzes erläutert. Dabei zeigen die Figuren 1 bis 3 ein und dasselbe ATM-Kommunikationsnetz für eine Leitwegsuche und Bildung von Leitweginformation, jedoch von unterschiedlichen Vermittlungsknoten aus gesehen.

Das Hierarchiebild des ATM-Kommunikationsnetzes zeigt beispielhaft drei Teilnetze TA,TB,TC. Das erste Teilnetz TA umfaßt die physikalischen Knoten A.1..6. Für den zu betrachtenden Verbindungsaufbau ist der Knoten A. 1 der Ursprungsvermittlungsknoten und der Knoten A.6 der Zielvermittlungsknoten. Diese Ursprungs- und Zielknoten müssen sich jedoch nicht in der gleichen Peer Group (Teilnetz) befinden, auch kann die Inanspruchnahme von Umwegen erst durch einen Transitknoten erfolgen. Ein weiteres Teilnetz TB umfaßt die Knoten B.1..5 und ein zusätzliches weiteres Teilnetz TC die Knoten C.1..4. Die Teilnetze TA, TB (peer groups der niedrigsten Hierarchieebene) sind auf einer höheren Hierarchieebene zu einer Netzgruppe TAB (peer group höherer Hierarchieebene) zusammengefaßt und werden jeweils durch eine logischen Knoten A, B repräsentiert. Auf einer wiederum höheren Hierarchieebene ist diese Netzgruppe TAB (peer group) mit dem weiteren zusätzlichen Teilnetz TC zu einer Netzgruppe TABC zusammengefaßt, wobei ein logischer Knoten AB die Netzgruppe höherer Hierarchieebne TAB und ein logischer Knoten C, das weitere zusätzliche Teilnetz TC repräsentieren.

Die Knoten sind untereinander durch physikalische Verbindungsleitungen (physikal links) verbunden. Links pb1,2,3 und pc1,2 zwischen Knoten verschiedener Teilnetze sind zusätzliche Informationen zugeordnet.

Legende:

Anfangsbuchstabe

p= physical link,
h=horizontal link,
u= initialer Uplink,
U=induzierter Uplink

pb1,hb1, und ub1, bzw. pb2,hb2, und ub2 bzw. pb3,hb3, und ub3 bzw.pc1, uc1, Uc1 und hc1 bzw. pc2, uc2, Uc2 und hc2 sind beispielhaft mit einem jeweils identischen Aggregation Token gekennzeichnet.

Die Knoten, in denen nach den Figuren 1 bis 3 die Leitweginformation gebildet wird, sehen nur jeweils die dick umrandeten Peer Groups (die im jeweiligen Knoten gespeicherte Wissensbasis umfaßt Angaben über diese Peer Groups). Statt der physikalischen Verbindungsleitungen, welche aus der hierarchisch niedrigsten Peer Group herausführen, sehen sie die diesbezüglich zugeordneten Uplinks. Nur die jeweiligen Grenzknoten selbst wissen um diese Zuordnung, teilen dieses Wissen aber nicht den übrigen Knoten der Peer Group mit.

Gesucht ist eine Route vom Ursprungsknoten A.1 zum Zielknoten A.6. Blockiert sind die Verbindungsleitungen pa5, pa6, die eine direkte Route vom Ursprungsknoten A.1 zum Zielknoten A.6 zulassen würden. Dick eingezeichnet ist der physikalische Weg, den der Verbindungsaufbau nehmen sollte.

Tätigkeit des Ursprungsknotens A.1:

Im Ursprungsknoten A.1 sei der Graph G1, in Form einer Liste von Links samt deren Begrenzungsknoten gespeichert, d.h. G1(A.1) - siehe Figur 1:

    (pa2 : A.2 , A.1), (pa3 : A.3 , A.1), (pa4 ; A.4 , A.5), (pa5 : A.5 , A.1), (pa6 : A.6 , A.5),
    (ub1: A.2 , B), (ub2: A.3 , B), (ub3: A.4 , B),
    (uc1 : A.5, C), (uc2 : A.6 , C).
    (hb1 : B , A) , (hb2 : B , A), (hb3 : B , A),
    (Uc1 : A, C), (Uc2 : A , C),
    (hc1 : C , AB), (hc2 : C , AB),

Es werden die blockierten Leitungen entfernt, und zwar (pa5 : A.5 , A.1), (pa6 : A.6 , A.5), und es wird der Graph G2(A.1) bestimmt:

(pa2 : A.2, A.1), (pa3 : A.3 , A.1), (pa4 : A.4 , A.5),
(ub1: A.2 , B), (ub2: A.3 , B), (ub3: A.4 , B),
(uc1 : A.5, C), (uc2 : A.6 , C).
(hb1 : B , A), (hb2 : B , A), (hb3 : B , A),
(UC1 : A, C), (UC2 : A , C),
(hc1 : C , AB), (hc2 : C , AB),

Alle ancestor nodes samt angrenzenden Leitungen werden entfert, nämlich

(hb1 : B , A) , (hb2 : B , A), (hb3 : B , A),
(Uc1 : A, C), (Uc2 : A , C),
(hc1 : C , AB), (hc2 : C , AB),

und damit Graph G3(A.1) bestimmt:

(pa2 : A.2 , A.1), (pa3 : A.3 , A.1), (pa4 : A.4 , A.5),
(ub1: A.2 , B), (ub2: A.3 , B), (ub3: A.4 , B),
(uc1 : A.5, C), (uc2 : A.6 , C).

Die Anwendung des Dijkstra-Routing-Algorithmus erbringt die Folge F1:
Destination Node D = A.6, uc2,C, uc1,A.5, pa4, A.4, ub3, B, ub1, A.2, pa2, A.1=Source Node S.
Die umgekehrte Reihenfolge = F2 lautet:
Source Node S=A.1, pa2,A.2, ub1, B, ub3, A.4, pa4, A.5, uc1, c,uc2, A.6 = Destination Node D.
Die Folge F3 wird bestimmt:
A.1, pa2, A.2, ub1, B, hb3,A, Uc1, C, hc2, AB.
Die Folge F4 wird bestimmt:
A.1, pa2, A.2, ub1, A, hb1, B,hb3,A, Uc1,AB, hc1, C, hc2, AB.
Daraus werden die Informationselement des DTL-Kellerspeichers abgeleitet. Die Folge F4 wird nach jedem Uplink zerteilt und man bildet aus jeder der entstandenen Teilfolge ein Informationselement DTL, wie sie zum nächsten physikalischen Knoten gesendet werden. Der Zeiger zeigt auf das x-te geklammerte Knoten-Link-Paar.

1.DTL: (A.1, pa2), (A.2, ub1), Zeiger=2
2.DTL: (A, hb1), (B, hb3), (A, Uc1), Zeiger=1
3.DTL: (AB, hc1), (C, hc2), (AB,x'00 00 00 00), Zeiger=1

Tätigkeit des Transit-Knotens B.2 (Eintrittsknoten im weiteren Teilnetz TB):

Der Transit-Knoten B.2 empfängt folgende Leitweginformation ri:

1. DTL: (A, hb1), (B, hb3), (A, Uc1), Zeiger=2
2. DTL: (AB, hc1), (C, hc2), (AB,x'00 00 00 00), Zeiger=1

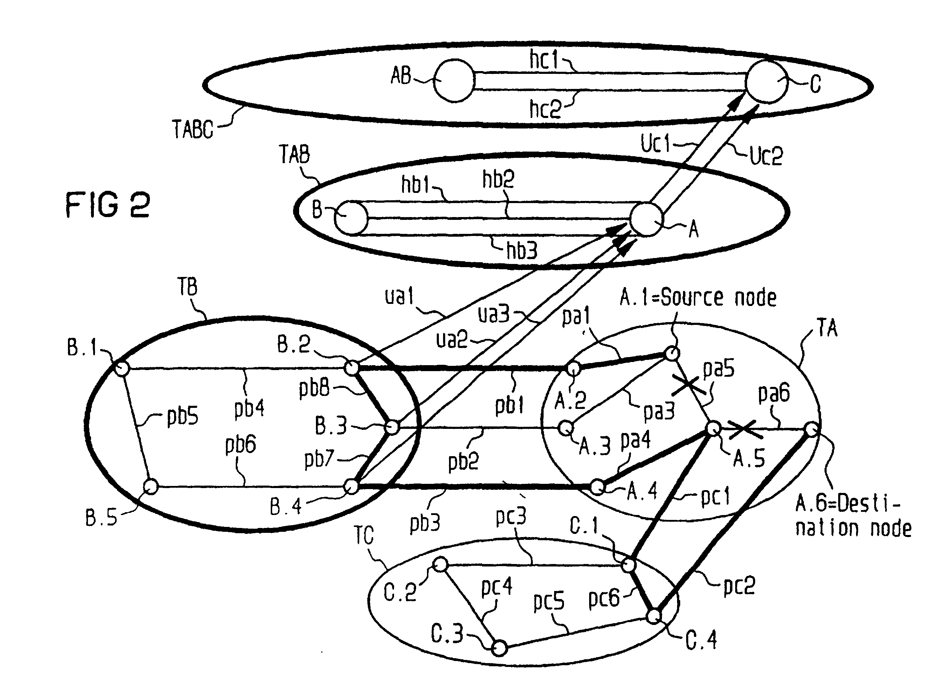

Knoten B.2 hat das von ihm sichtbare Netz als Graph G1(B.2) gespeichert - siehe Figur 2 dick umrahmt:

(pb4: B.1,B.2), (pb5: B.1,B.5), (pb6: B.4,B.5), (pb7: B.3,B.4), (pb8: B.2,B.3),
(ua1: B.2, A), (ua2: H.3, A), (ua3: B-4, A),
(hb1 : B , A), (hb2 : B , A), (hb3 : B , A),
(Uc1 : A, C), (Uc2 : A , C),
(hc1 : C , AB), (hc2 : C , AB).

Weil es sich um einen Transit-Verkehr handelt, wird G1'(B.2) gebildet, indem zunächst D'(B.2) und Link-to-D' (B.2) bestimmt wird:

D'(B.2) = A; Link-to-D'(B.2) = hb3.

Im Transit-Knoten werden vom Graphen G1(B.2) alle Knoten vom Hierarchielevel größer-gleich des logischen Knotens A, sowie die diesbezüglich angrenzenden Links entfernt, ausgenommen jedoch D'(B.2) = A selbst und ausgenommen jene Uplinks für die A Upnode ist und mit Link-to-D'(B.2)=hb3 korreliert sind. Es entsteht der Graph G1'(B.

2) :

(pb4: B.1,B.2), (pb5: B.1,B.5), (pb6: B.4,B.5), (pb7: B.3,B.4), (pb8: B.2,B.3),
(ua3: B.4, A)

Da keine Blockierungen dem Transitknoten B.1 bekannt sind, gilt Graph G1'(B.2) = Graph G2'(B.2)
Da keine ancestor nodes des B.1 weiter davon entfernt werden können, gilt G1' (B.2) = G2'(B.2) = G3'(B.2).
Der angewendet Dijkstra-Algorithmus ergibt eine Folge F1:

D'(B.2) =A, ua3, B.4, pb7, B.3, pb8, B.2=S' (B.2)

Daraus ergibt sich in umgekehrter Reihenfolge F2:

S'(B.2) =B.2, pb8, B.3, pb7, B.4, ua3, A=D'(B.2)

Die Operation zur Bildung von F3 ergeben keine Veränderungen, d.h. Folge F2 = Folge F3.
Aus Folge F3 wird Folge F4 gebildet:

S'(B.2) =B.2, pb8, B.3, pb7, B.4, ua3, B, hb3, A=D'(B.2)

Aus Folge $F_4$ werden die Informationselemente DTLs der Leitweginformation ri gebildet:

1. DTL: (B.2, pb8), (B.3, pb7), (B.4, ua3), Zeiger=2
2. DTL: (B, hb3), A=D'(B.2), Zeiger=1
von denen man das letzte (=2.) DTL nicht übernimmt.

Vom Eintrittsknoten B.2 zum weiteren Knoten B.3 im weiteren Teilnetz TB wird somit folgende Leitweginformation ri im DTL-Kellerspeicher-Format geschickt:

1. DTL, neu gebildet:

(B.2, pb8), (B.3, pb7), (B.4, ua3), Zeiger=2

2. DTL, empfangen und weiterverarbeitet:

(A, hb1), (B, hb3), (A , Uc1), Zeiger=2

3. DTL, empfangen und weiterverarbeitet:

(AB, hc1), (C, hc2), (AB,x'00 00 00 00), Zeiger=1

Tätigkeit des Transit-Knotens A.4 im ersten Teilnetz TA:

Der Knoten A.4 empfängt folgende Leitweginformation ri:

1. DTL: (A, hb1), (B, hb3), (A, Uc1), Zeiger=3
2. DTL: (AB, hc1), (C, hc2), (AB,x'00 00 00 00), Zeiger=1

Knoten A.4 hat das von ihm sichtbare Netz als Graph G1(A.4) gespeichert, welcher mit dem vom Ursprungsknoten A.1 gespeicherten Graphen G1(A.1) übereinstimmt, siehe oben und siehe Figur 1 (dick umrandet).
Weil es sich um einen Transit-Verkehr handelt wird G1'(A.4) gebildet, indem
zunächst D'(A.4) und Link-to-D'(A.4) bestimmt wird:

D'(A.4) = C
Link-to-D'(A.4) = hcl.

Vom Graphen G1(A.4) werden alle Knoten vom Hierarchielevel größer-gleich dem Hierarchielevel von D'(A.4) = C, sowie die diesbezüglich angrenzenden Links entfert, jedoch ausgenommen D'(A.4) = C selbst und ausgenommen jene Uplinks für die D'(A.4) = C Upnode ist und mit Link-to-D'(A.4)=hc1 korreliert sind.

Es entsteht Graph G1'(A.4) :

(pa2 : A.2 , A.1), (pa3 : A.3 , A.1), (pa4 : A.4 , A.5), (pa5 : A.5 , A.1), (pa6 : A.6 , A.5),
(ub1: A.2 , B), (ub2: A.3 , B), (ub3: A.4 , B),
(uc1 : A.5, C),
(hb1 : B , A), (hb2 : B , A), (hb3 : B , A),
(Uc1 : A, C)

Die blockierten Links werden entfernt und es ergibt sich daraus Graph G2'(A.4) :

(pa2 : A.2 , A.1), (pa3 : A.3 , A.1), (pa4 : A.4 , A.5),
(ub1: A.2 , B), (ub2: A.3 , B), (ub3: A.4 , B),
(uc1 : A.5, C),
(hb1: B , A) , (hb2 : B , A), (hb3 : B , A),
(Uc1 : A, C)

Sind davon alle noch enthaltenen ancestor nodes samt den daran angrenzenden Verbindungsleitungen entfernt, so ergibt sich Graph G3'(A.4) :

(pa2 : A.2 , A.1), (pa3 : A.3 , A.1), (pa4 : A.4 , A.5),
(ub1 : A.2 , B), (ub2: A.3 , B), (ub3: A.4 , B),
(uc1 : A.5, C).

Per Dijkstra-Routing-Algorithmus wird darin als beste Route vom Transitknoten A.4 zum Vertreter C des zusätzlichen weiteren Teilnetzes TC die folgende Folge F1 ermittelt:

D'(A.4)=C, uc1, A.5, pa4, A.4= S'(A.4)

Durch Umkehrung der Reihenfolge ergibt sich die Folge F2:

S'(A.4)= A.4, pa4, A.5, uc1, C=D'(A.4)

Da die Folge F2 hinsichtlich Hierarchieebene der auftretenden Knoten niemals absteigend ist, So ergeben die Operationen zur Bildung der Folge F3 keine Änderungen: F3= F2.

Aus der Folge F3 wird die Folge F4 gewonnen, nämlich:

S'(A.4)= A.4, pa4, A.5, uc1,AB,hc1, C=D'(A.4)

Aus der Folge F4 die folgenden Informationselement DTLs der Leitweginformation ri abgeleitet:

1. DTL: (A.4, pa4), (A.5, uc1), Zeiger=2
2. DTL: (AB, hc1), (C, x'00 00 00 00), Zeiger=1
von denen man das letzte (=2.) DTL nicht übernimmt.

Vom Transitknoten A.4 zum Knoten A.5 wird somit folgender
DTL-Kellerspeicherinhalt übermittelt:

1. DTL, neu gebildet: (A.4, pa4), (A.5, uc1), Zeiger=2
2. DTL, empfangen und weiterverarbeitet: (A, hb1), (B, hb3), (A, Uc1), Zeiger=3
3. DTL, empfangen und weiterverarbeitet: (AB, hc1), (C, hc2), (AB,x'00 00 00 00), Zeiger=1

Tätigkeit des Transit-Knotens C.1 im zusätzlichen weiteren Teilnetz TC:

Der Knoten C.1 empfängt folgende Leitweginformation ri:

1.DTL: (AB, hc1), (C, hc2), (AB,x'00 00 00 00), Zeiger=2.

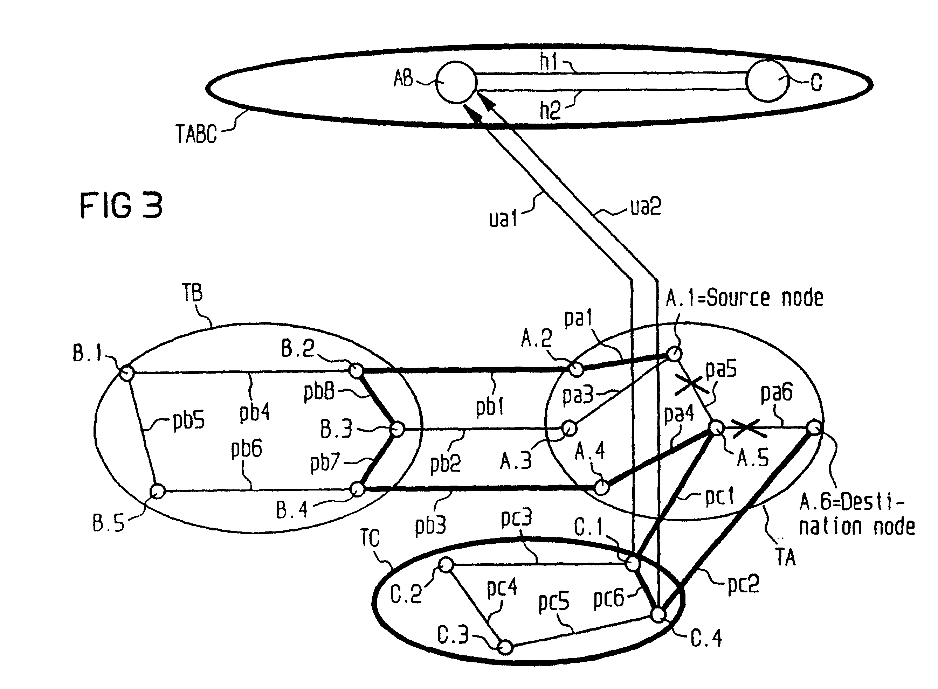

Der Knoten C.1 hat das von ihm sichtbare Netz als Graph G1(C.1) gespeichert, siehe Figur 3:

(pc3: C.1, C.2), (pc4: C.2, C.3), (pc5: C.3, C.4), (pc6: C.1, C.4),
(uab1: C.1, AB), (uab2: C.4, AB)
(hc1: C, AB), (Hc2: C, AB)

Weil es sich um einen Transit-Verkehr handelt wird G1'(C.1) gebildet, indem zunächst D'(C.1) und Link-to-D'(C.1) bestimmt wird:

D' (C.1) = AB
Link-to-D'(C.1) =hc2.

Von Graph G1(C.1) werden alle Knoten von einer Hierarchieebene größer-gleich der Hierarchieebene von D'(C.1) = AB, sowie die diesbezüglich angrenzenden Links entfernt, jedoch ausgenommen D'(C.1) = C selbst und ausgenommen jene Uplinks für die D'(C.1) = AB Upnode ist und mit Link-to-D'(C.1)=hc2 korreliert sind.
Es ergibt sich der Graph G1'(C.1) :

(pc3: C.1, C.2), (pc4: C.2, C.3), (pc5: C.3, C.4), (pc6: C.1, C.4),
(uab2: C.4, AB)

Da der Knoten C.1 keine blockierten Verbindungsleitungen vorfindet (diese befinden sich im ersten Teilnetz TA), ist
G1'(C.1) = G2'(C.1).
Weil sich davon keine ancestor nodes bezüglich Knoten C.1 zusätzlich entfernen lassen ist:

G1' (C.1) = G2'(C.1) = G3'(C.1)

Mit Hilfe des Dijkstra-Routing-Algorithmus wird de Knoten C.1 als beste Route die Folge F1 ermitteln:

D'(C.1)=AB, uab2, C.4, pc6, C.1=S'(C.1)

Durch Umkehrung der Reihenfolge ergibt sich Folge F2:

S'(C.1), pc6, C.4, uab2, AB=D'(C.1)

Da die Folge F2 hinsichtlich der Hierarchieebene der auftretenden Knoten niemals absteigend ist, so ergeben die Operationen zur Bildung der Folge F3 keine Änderungen:

F3 = F2.

Aus der Folge F3 wird die Folge F4 gewonnen, nämlich:

S'(C.1)=C.1, pc6, C.4, uab2,C,hc2, AB=D'(C.1)

Aus der Folge F4 werden die folgenden Informationselemente DTL der Leitweginformation ri abgeleitet:

1. DTL: (C.1, pc6), (C.4, uab2), Zeiger=2
2. DTL: (C.hc2), (AB,x'00 00 00 00), Zeiger=1
von denen man das letzte (=2.)DTL nicht übernimmt.

Vom Knoten C.1 zum weiteren Knoten C.4 im zusätzlichen weiteren Teilnetz TC wird somit folgender DTL-stack übermittelt;

1. DTL, neu gebildet: (C.1, pc6), (C.4, uab2), Zeiger=2
2. DTL, empfangen und weiterverarbeitet: (AB, hc1), (C, hc2), (AB,x'00 00 00 00), Zeiger=2.

Tätigkeit des Wiedereintritts-Knotens A.6 für den zweiten Wiedereintritt ins erste Teilnetz TA:

Der Knoten A.6 empfängt folgende Leitweginformation ri:
1. DTL: (AB, hc1), (C, hc2), (AB,x'00 00 00 00), Zeiger=3.

Insofern Knoten A.6 erkennt, daß das Ziel-Endgerät an ihm unmittelbar angeschlossen ist, sendet er die Verbindungsaufbaumeidung (setup) entlang der diesbezüglichen UNI-Schnittstelle (nicht mehr PNNI-Schnittstelle) zu diesem, wobei, UNI-Protokoll-gemäß, keine Informationselemente DTLs mitgegeben werden. Der Leitweg ist abgeschlossen.

2. Ausführungsbeispiel (PNNI-Netz mit einfachen und komplexen Knoten):

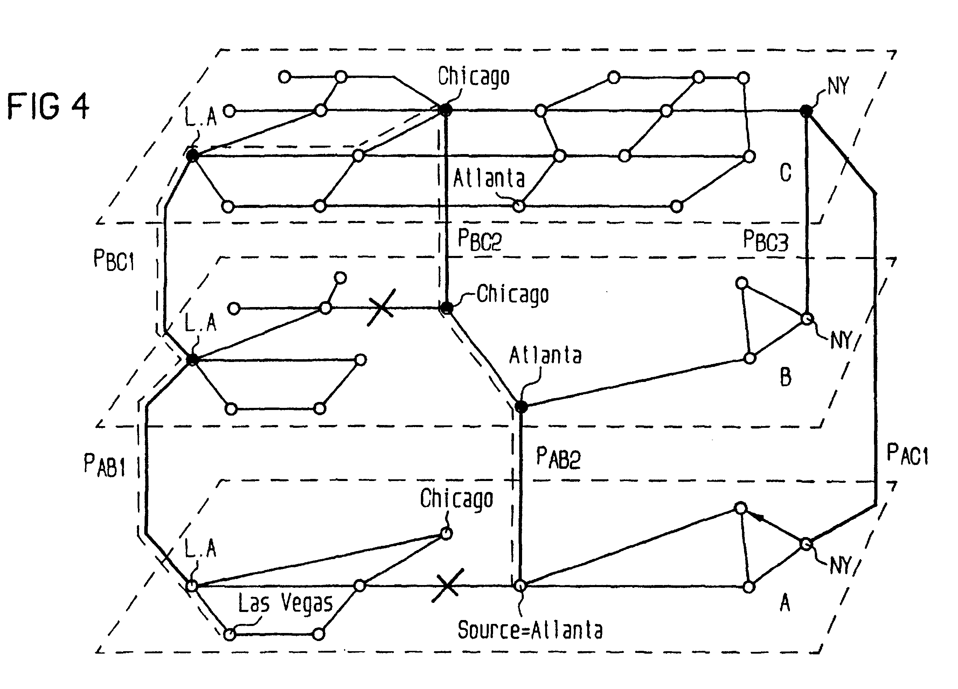

Ein zweites Ausführungsbeispiels zeigt ein Kommunikationsnetz, bei dem drei verschiedene Netzbetreiber A, B und C ihre Netze wechselseitig mit physikalischen Leitungen (Verbindungsleitungen p) verbinden: (siehe Fig. 4)

in der Stadt New York (NY) :       A mit C, sowie B mit C,
in der Stadt Chicago (Ch) :       B mit C,
in der Stadt Atlanta (Atl) :       A mit B,
in der Stadt Los Angelos (LA) :       A mit B, sowie B mit C.

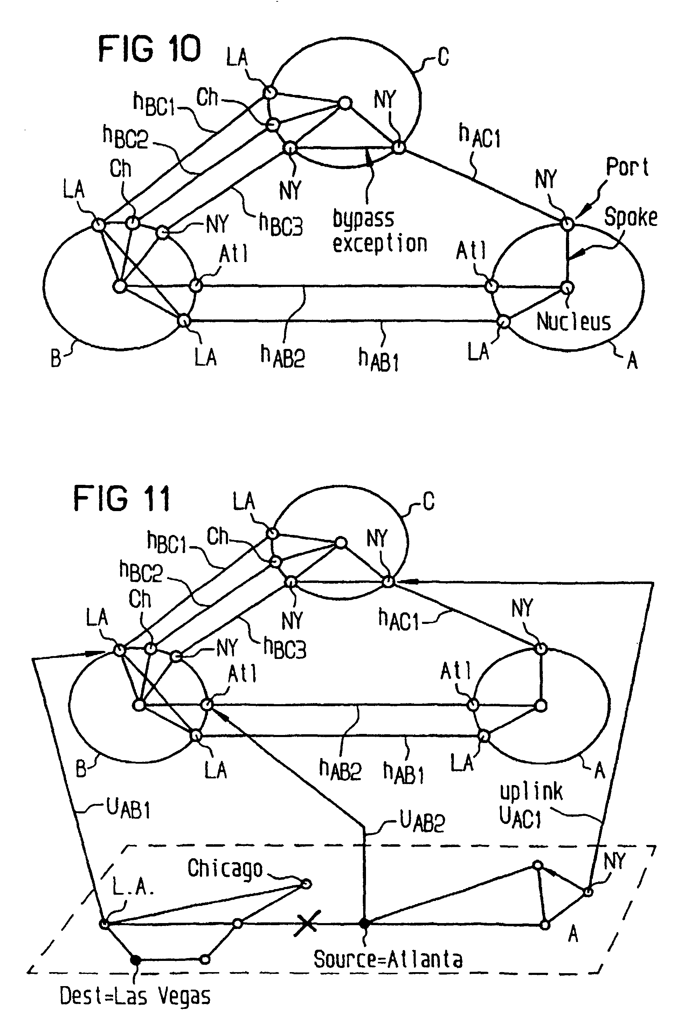

Blockierte Leitungen sind ausgekreuzt. Ein Teilnetz-A-Endgerät in Atlanta möchte eine Verbindung zu einem Ziel-Endgerät gleichfalls im Netz-A in Las Vegas aufbauen.
Die gepunktete Linie bezeichnet den physikalen Verlauf einer Route, beginnend im Atlanta-Knoten des Netzes A und endend im Las Vegas-Knoten gleichfalls des Netzes A. Die Ermittlung der Leitweginformation bzgl. dieser Route wird im folgenden gezeigt.
Gemäß des PNNI-Konzepts sind die drei Teilnetze A, B, C jeweils als Logical Group Node einer hierarchisch höheren Peer Group darstellbar, wobei die Größen der drei Netze nahelegen, daß sie allesamt als komplexe Knoten dargestellt werden: bestehend aus einem fiktiven Nukleus im Zentrum eines Großkreises, aus Ports am Rande eines Großkreises, aus Port-Nukleus-Verbindungsleitungen (Spokes zwischen Port und Nukleus), sowie Port-Port-Verbindungsleitungen (bypass exceptions zwischen je zwei Ports). Die physikalischen Querverbindungsleitungen zwischen den drei Netzen entsprechen sogenannten horizontal links (h) (siehe Fig. 10).
Jeder Knoten des Teilnetzes A hat somit das folgende (identische) PNNI-gemäße Netzbild als Topologieinformation gespeichert (siehe Fig. 11). Es ist eine visualisierte Wiedergabe seiner PNNI-gemäßen Topology Database. Es besteht im wesentlichen aus dem "genauen" Bild des Teilnetzes A, sowie den vereinfachten, aggregierten, als komplexe Knoten (complex nodes) dargestellten Knoten, welche die Teilnetze A, B, C als jeweils Ganzes repräsentieren.

Anlegen eines umfassenden Topologiegraphen:

Erfindungsgemäß wird aus der PNNI-gemäßen Topology-Database der nachfolgende Topologiegraph abgeleitet, bei dem es nur noch gerichtete, d.h. unidirektionale Kanten gibt. Jeder Knoten (die simple nodes des Teilneczes A, die Port-Knoten und Nukleus-Knoten der komplexem Knoten) erhält eine Knotennummer i (1<=i<=m), jede (unidirektionale) Kante (auch als link bezeichnet) eine Kantennummer j(1<=j<=n).
Der Topologiegraph (siehe Fig. 7) ist als Tabelle gespeichert, deren Elemente per Kantennummer j indiziert werden und die die beiden Begrenzungsknotennummern der Kante j enthalten. d.h. jenen Knoten, an dem die gerichtete Kante beginnt, sowie jenen, wohin sie führt. Die Kantenrichtung entspricht der "outgoing direction" in dem Sinne, wie sie bei den Horizontal Link PTSEs verwendet wird.
Es werden jedoch noch weitere Informationen angegeben. Deshalb werden pro Kante j folgende Einträge eingerichtet:

```
LinkTable[j] .FromNode
LinkTable[j] .ToNode
LinkTable[j] .ForwardAttributesPtr
LinkTable[j] .BackwardAttributePtr
LinkTable[j] . SpokeOrBypass    // TRUE/FALSE
LinkTable[j] .Included          // TRUE/FALSE
LinkTable[j] .InducedLink       // Kantennummer des induzierten
                                // Uplink-Kante bzw induzierten
                                // (outgoing) Horizontal-Kante
                                // bzw. 0
```

```
LinkTable[j] .MyUpLink              // Nummer der reziproken
                                    // Kante, falls j downlink ist,
                                    // sonst=0
LinkTable[j] .AggregationToken  // 4 Bytes
LinkTable[j] .Type                  // Werte sind:Horizontal,Bypass
                                    // Uplink, Downlink, Spoke,
LinkTable[j] .PortId                // Horizontal, Uplink
```

Der Topologiegraph umfaßt ferner m Knoten. Für jeden Knoten i werden die folgenden Informationen eingerichtet:

```
NodeTable[i] .Type            // Werte sind: Port, Nucleus, simple
NodeTable[i] .PortId          // 4 Byte große Port ID>0 falls
                             // Portknoten
NodeTable[i] .MyNucleusNode   // zugehörige Nucleus-
                             // Knotennummer falls, Type=Port,
                             // sonst 0)
NodeTable[i] . AncestorNode   // Ancestor-Knotennummer oder 0
                             // falls kein Ancestor-Knoten
                             // vorhanden .Dessen  Type ist
                             // entweder Simple oder Nukleus.
NodeTable[i] .HierarchyLevel      // Bereich: 0 bis 104
NodeTable[i] .TransitRestricted   // TRUE/FALSE
NodeTable[i] .NextPortNode        // Kette der port-Knoten:
                                  // Der Nukleus-Knoten ver-
                                  // weist auf den ersten
                                  // Port-Knoten, der erste
                                  // auf den zweiten, der
                                  // letze auf 0.
                                  // Der Wert ist ebenfalls 0,
                                  // wenn i ein Simple-Knoten.
NodeTable[i] .NodeId              // Derselbe Wert bei Port-
                                  // und Nukleus-Knoten.
```

Aus diesen Einträgen sind folgende Angaben durch Umformung ableitbar:

```
NodeTable[i] .CountIncomingLinks    // Anzahl der ankommenden
                                    // Kanten
NodeTable[i] .IncomingLinkTable [j] // im Knoten i ankommende
                                    // Kante j
```

Eine Knotennummer i wird angelegt, wobei:

a) NodeTable[i] .Type = Simple

Diese Zuweisung erfolgt nach Auswertung eines Nodal Information PTSEs eines simplen node. Ihm zugeordnet ist die NODE ID dieses Nodal Information PTSE durch NodeTable[i] .NodeId.

b) NodeTable[i] .Type = Nukleus

Diese Zuweisung erfolgt nach Auswertung eines Nodal Information PTSEs eines komplexen Knotens. Ihm zugeordnet ist die NODE ID dieses Nodal Information PTSE mit NodeTable[i] .NodeId.

c) NodeTable[i] .Type = Port

Diese Zuweisung erfolgt nach Auswertung Nodal Information PTSEs eines komplexen Knotens und eines diesbezüglichen (outgoing) Horizontal Link-PTSE oder Uplink PTSE, welches eine Port-ID enthält. Jeder Portknoten speichert sich per . NodeTable[i] .MyNucleusNode seine Nukleus-Knotennummer, sowie per NodeTable[i] .MyPortID seine PORT ID.
Die Knotennummern der Port-Knoten bezüglich eines komplexen Knotens sind, beginnend bei ihrem Nukleusknoten, per Node-Table[i] .NextPortNode Einträge vorwärts verkettet.
Der Vermittlungsknoten (= simpler Knoten), der dies implementiert, hat seine eigene Knotennummer besonders gespeichert. Sie wird im folgenden mit S bezeichnet (S wie Startknoten). Die Knotennummern seiner Ancestor Nodes (sie sind entweder vom Type = simple oder Nukleus) werden wie folgt bestimmt und mittels NodeTable[i] . AncestorNode, beginnend bei i=S verkettet. Im Nodal Information PTSE ist ein HigherLevelBinding Information-Group eingebettet, welches die Node ID des nächsten Ancestor-Nodes enthält. Per Suchen und Vergleichen mit den Einträgen NodeTable[i] .NodeId wird diese Verkettung aufgebaut.
Eine Kante, d.h eine Kantennummer wird angelegt, wobei:

a) LinkTable[j] .Type = Horizontal

Diese Zuweisung erfolgt nach Auswertung eines Horizontal Link PTSE, desses Port in LinkTable[j] .PortId gespeichert ist.
Die hierbei entgegengesetzte Kante beruht auf der Existenz eines zweiten komplementären Horizontal Link PTSE. Zwei Horizontal Link PTSES sind zueinander komplementär, wenn deren originating node und remote node Angaben (Start- und Zielknoten) reziprok sind und beide ein und dasselbe Aggregation Token enthalten. Jeder "horizontalen" Kante sind Vorwärts- und Rückwärts-Attribute zuzuordnen. Die Vorwärts-Attribute sind die outgoing Resource Availability Information des jeweiligen Horizontal Link PTSE. Die Rückwärts-Attribute sind die outgoing Resource Availability Information des komplementären Horizontal Link PTSE.
Die "horizontale" Kante j beginnt an einem Knoten, dessen Nummer = LinkTable[j] .FromNode ist und die wie folgt bestimmt wird:
Ist der Startknoten des Horizontal Link PTSE ein einfacher Knoten (simple node), so ist die Anfangs-Knotennummer von diesem simple node allein bestimmt. Ist der Startknoten aber ein komplexer Knoten, so ist die Anfangs-Knotennummer von dem komplexen Knoten und zusätzlich von der Port ID aus dem Horizontal Link PTSE bestimmt. Der Anfangsknoten ist somit ein Portknoten.
Die horizontale Kante endet an einem Knoten, dessen Nummer = LinkTable[j] .ToNode ist, welche wie folgt bestimmt wird:
Ist der Zielknoten des Horizontal Link PTSE ein einfacher Knoten (simple node), so ist die Ende-Knotennummer von diesem einfachen Knoten (und seiner NODE ID) allein bestimmt. Ist der Zielknoten jedoch ein komplexer Knoten, so ist die Ende-Knotennummer erst durch die zusätzliche remote Port ID bestimmt. Er ist somit ein Portknoten. Eine horizontale Kante j hat insbesondere LinkTable[j] .InducedLink = 0 gesetzt.

b) LinkTable[j] .Type = Uplink

Diese Zuweisung erfolgt nach Auswertung eines Uplink PTSE. Die Vorwärts-Attribute sind die outgoing Resource Availability Information aus dem Uplink PTSE. Die Rückwärts-Attribute stehen in einer ULIA Information Group aus dem Uplink PTSE.

Die Uplink-Kante beginnt an einem Knoten, dessen Nummer = LinkTable[j] .FromNode ist, welche wie folgt bestimmt wird: Ist der Startknoten des Uplink-PTSE ein einfacher Knoten, so ist die Anfangs-Knotennummer von diesem einfachen Knoten allein bestimmt. Ist der Startknoten jedoch ein komplexer Knoten, so ist die Anfangs-Knotennummer von dem komplexen Knoten plus der Port ID aus dem UpLink PTSE bestimmt. Er ist dann ein Portknoten.

Die Uplink-Kante endet an einem Knoten, dessen Ende-Knotennummer wie folgt bestimmt wird:

Ist der upnode des Uplink- PTSE ein einfacher Knoten, so ist die Ende-Knotennummer von diesem einfachen Knoten allein bestimmt. Ist der upnode aber ein komplexer Knoten, so ist die Ende-Knotennummer von dem komplexen Knoten plus einer Port ID bestimmt, welche man wie folgt ermittelt:

Es wird zunächst jener ancestor node bestimmt, der denselben Hierarchielevel hat wie der besagte komplexe upnode. Dann wird in der Topology Database bei diesem ancestor node nach jenem Horizontal Link PTSE gesucht, dessen Remote Node Angabe die NODE ID des komplexen upnode ist und dessen Aggregation Token mit jenem des Uplink PTSE identisch ist. In diesem Horizontal Link PTSE findet sich unter Remote Port ID die gesuchte Port-ID. Der Endpunkt der Uplink-Kante ist dann ein Portknoten.

Eine Uplink-Kante j hat insbesondere LinkTable[j] .InducedLink =j*>0 gesetzt, verweisend auf einen induzierten weiteren Uplink oder auf einen induzierten horizontal Link.

Anfangs-Knoten und Ende-Knoten der komplementären downlink-Kante sind reziprok zu diesen Angaben der uplink-Kante. Eine downlink-Kante j hat insbesondere einen Verweis auf die komplementäre Uplink-Kante j*: LinkTable[j] .MyUplink = j*>0. Alle sonstigen Kanten haben hier 0 eingetragen.

c) LinkTable[j] .Type = DownLink

Eine komplementäre downlink-Kante wird zusätzlich angelegt zur uplink-Kante, mit reziproken Begrenzungsknoten und reziproken Vorwärts- und Rückwärts-Attributen.

d) LinkTable[j] .Type = Spoke

Diese Zuweisung erfolgt nach Auswertung eines Nodal Information PTSEs eines komplexen Knotens plus eines zugehörigen Nodal State Paramter PTSE mit input port x=0 und output port y=0 (Default Spokes). Bezüglich eines komplexen Knotens werden zwischen einem Port-Knoten und einem Nukleus-Knoten zwei komplementäre Kanten angelegt.

Die Vorwärts-Attribute sind identisch mit den Rückwärts-Attributen. Dies gilt für die Port-Nukleus-Verbindungsleitungen und für die Nukleus-Port-Verbindungsleitungen. Nachdem alle Spoke-Kanten auf diese Weise angelegt sind, könnten die Vorwärts- und Rückwärts-Attribute einzelner (default) Spokes aufgrund weiterer Nodal State Parameter PTSEs mit x=0 und y>0 bzw. x>0 und y=0 korrigiert werden. Werden aufgrund eines Nodal State Parameter PTSEs mit input port x>0 und output port y=0 die Vorwärts-Attribute einer Port-Nukleus-Verbindungsleitung modifiziert, so werden auch die Rückwärts-Attribute der komplementären Nukleus-Port-Verbindungsleitung mit denselben Werten modifiziert.

d) LinkTable[j] .Type = Bypass

Diese Zuweisung erfolgt nach Auswertung eines Nodal Information PTSEs eines komplexen Knotens plus eines zugehörigen Nodal State Paramter PTSE mit input port x>0 und output port y>0 (bypass exception). Es ist vorgesehen, daß auch für die umkehrrichtung ein Nodal State Parameter PTSE vom input port y zum output port x vorgegeben wird. Jedes dieser beiden PTSES enthält die Vorwärts-Attribute, welche gleichzeitig als Rückwärts-Attribute der komplementären Kante dienlich sind. Immer dann wird zwischen zwei Ports ein Paar von bypass exceptions vorgesehen, wenn die beiden Ports geographisch möglichst nahe beieinander liegen.

Sämtliche Kanten erhalten, zusätzlich zum Umstand, daß für sie eine Kantennummer j angelegt ist, die Markierung LinkTable[j] .Included := TRUE

Sind diese Einträge erfolgt, liegt die Topologieinformation im Graphen G1 vor.

Reduktion des Topologiegraphen G1:

Der soweit erstellte Topologiegraph ist der umfassendste Graph und wird dann neu erstellt, wenn für seine Erstellung maßgebende PTSEs aus der Topology Database verschwunden sind oder neue hinzukommen.

vor einer speziellen Leitwegermittelung, welche auf unterschiedlichste Besonderheiten und Kommunikationsbedingungen eingeht, werden hiervon gewisse Kanten j ausgeschlossen, und zwar per : LinkTable[j] .Included := FALSE

a) Transit-Restricted Knoten meiden:

Ein Knoten möge laut einem Transit-Restricted-Bit seines Nodal Information PTSE nicht für Transit-Vermittlungsdienste zur Verfügung stehen. Dies führt dazu, daß für diesbezügliche simple-, Port- oder Nukleus-Knoten i NodeTable[i].TransitRestricted:= TRUE gesetzt sind. Eine Kante j wird ausgeschlossen, wenn wenigstens einer seiner beiden Begrenzungsknoten diesen Wert auf TRUE gesetzt hat und er gleichzeitig weder Ursprungs-Vermittlungsknoten noch Ziel-Vermittlungsknoten der Route ist. Der Ziel-Vermittlungsknoten D ist stets vom Type simple oder nucleus, niemals Port. Falls der Zielknoten D vom Type Nucleus ist und dieser wie alle zugehörigen Portknoten TransitRestricted:= TRUE gesetzt hat, so werden weder der Nukleusknoten noch die zugehörigen Portknoten vom Topologiegraphen ausgeschlossen. Im Beispiel: Knoten 22 und alle angrenzenden Kanten

b) Nicht-metrische Randbedingungen nicht erfüllt

Einzelne Kanten könnten nur für eine Teilmenge von Service Kategorien (CBR, ABR, UBR, VBR-rt, VBR-nrt) vorgesehen sein, welcher die des aktuell zu berücksichtigenden Verbindungswunsch nicht angehört. Als Kommunikationsbedingungen sind nicht-metrische Quality-of-Service Parameter (z.B. Max. Error Rate) vorgesehen, denen einzelne Kante den Anforderungen des Verbindungswunsches nicht genügen können. Sie werden vom Graphen G1 ausgeschlossen.

c) Generic Call Admission Control (G-CAC);

Einzelne Kanten könnten momentan nicht die erforderliche Bandbreite zur Verfügung haben und deshalb die Generic Call Admission Control - Prüfung nicht bestehen. LinkTable[i].ForwardAttributePtr und LinkTable[i].BackwardAttributePtr sind die hierbei benötigten aktuellen Auslastungsinformationen der einzelnen Kanten. Die die Kommunikationsbedingungen nicht erfüllenden Kanten werden vom Graphen G1 ausgeschlossen. Im Beispiel wird die unidirektionale Kante 56:21-19 wird aus diesem Anlaß ausgeschlossen. Der aufgrund von a), b) oder c) reduzierte Topologiegraph ist als Graph G2 bezeichnet.

d) Ancestor-Knoten

Alle Ancestor-Knoten des Ursprungsknotens S der Route werden ausgeschlossen, d.h. alle Kanten, die an diesen beginnen oder enden. All diese Ancestor-Knoten finden sich in der Folge {NodeTable[i] .AncestorNode}, beginnend mit i=S. Im Beispiel werden Nukleus und Portknoten von Teilnetz A, sowie alle diesbezüglich angrenzenden Kanten ausgeschlossen. Der somit reduziert Graph wird als G3 bezeichnet.

e) Eventuelle Schranke für den Grad der Umwege:

Als ziel-Vermittlungsknoten D der Route ist ein Knoten ermittelt worden, dessen PNNI-Hierarchie-Level gleich h ist (0<h<=104). Ein Netzadministrator könnte eventuell eine Integerzahl x derart vorgeben, daß nur Umwege zugelassen sind, welche den Hierarchiebereich einer Ancestor-Peer-Group vom Level H=Max( 0, h-x) nicht verlassen. Es werden all jene Kanten ausgeschlossen, von denen wenigstens ein Begrenzungsknoten einen zu hohen Hierarchiebereich hat, d.h. einen Wert < H hat. Im Beispiel werden keine Kanten aus diesem Anlass ausgeschlossen. Der derartig eingeschränkte Graph wird als G4 bezeichnet.

Dijkstra-Best-Route-Berechnung

Basierend auf dem reduzierten Topologiegraphen G3 oder G4 wird eine Dijkstra-Best-Route-Berechnung durchgeführt, von genau einem Startknoten S=MyOwnNodeNumber (S=21) ausgehend, hin zu jeglichem zielknoten. Diese Iteration bricht ab, sobald auch für den gewünschten Zielknoten D (D=17) die beste Route gefunden wurde.

Das Minimierungskriterium, im folgenden Distanz genannt, ist beispielsweise die minimale Administrative-Weight-Summe. In einer Iteration des Dijkstra-Algorithmus werden zwei Teilschritte unternommen:

a) Update der Distanz zum Ursprungs-Vermittlungsknoten bei all den Knoten, bei denen dieser Distanzwert noch nicht endgültig ist.

b) Bestimmung des nächsten Knotens, für den die momentan eingetragene Distanz endgültig ist, wobei für diesen Knoten auch festgelegt wird, welcher Knoten der unmittelbare Vorgängerknoten und welche Kante die Vorgängerkante in Richtung Ursprungs-Vermittlungsknoten ist.

Zu beachten ist ferner, daß nur solche Kanten betrachtet werden, welche im jeweiligen Knoten enden.

Metrische Randbedingungen: Sowohl ein Cell Transfer Delay als auch ein Cell Delay Variation gelten als metrische Parameter. Gegebenenfalls werden auch hierzu Summenwerte (wie bei der Distanz) gebildet und gegen eine vorgegebene Obergrenze verglichen. Wird beim Teilschritt b) erkannt, daß eine der metrische Randbedingungen nicht mehr erfüllt ist und für den Zielknoten die Distanz zum Ursprungsknoten noch nicht end-gültig ist, so wird die Iteration erfolglos abgebrochen.

Der Dijkstra-Routing Algorithmus ermittelt im Beispiel (siehe Fig. 8) die folgende dick schwarz gezeichnete Kantenfolge beginnend beim Knoten 21 und endend beim Knoten 17:

D.h. der Dijkstra Routing Algorithmus ermittelt die Folge F1 [Link#: from-node# - to-node#] :

57:21-5, 8:5-1, 3:1-3, 15:3-9; 26:9-7 ; 23:7-8; 14:8-2; 11:2-6; 42:6-16; 47:16-17;

Aus dieser Folge F1 werden die Spokes und bypass exceptions entfernt, d.h. all jene Kanten j, für die gilt: LinkTable[j] . Type = "Spoke" Or "Bypass", also:

57:21-5, 15:3-9; 14:8-2; 42:6-16; 47:16-17;

Aus dieser {Link#: from-node# -to-node#} - Folge F1 wird durch formale Umstellung eine {Node#,Link#,Node#}- Folge F2 erzeugt, indem man from-node# und Link# vertauscht, sowie die to-node# -Werte mit Ausnahme des allerletzten entfernt. Damit liegt die Folge F2 bestehend aus n=5 Kanten und n+1=6 Knoten vor.

Die Verfahrensschritte zum Bilden der Leitweginformation, d.h. zur Gewinnung eines DTL-stack, entsprechen denen des ersten Ausführungsbeispiels. Diese werden im folgenden wiederholt, jedoch abgestimmt auf die hierin benützten Bezeichnungen, sowie die Vorleistungen:

Es wird jene Folge F3 ermittelt, deren Knoten hinsichtlich ihrer Hierarchielevels niemals absteigend sind:

```
bhrl := FALSE;        // bhrl ist Abkürzung für: Below Highest
                      // Reached Level
current_node := node-1;  //d.h.:= Source Node S = 21
current_node_level := level des current_node;
                      //d.h. := NodeTable [S].HierarchyLevel


for i:=1 step 1 to n-1 do
 if  level des node-i+1 niedriger (sprichzahlmäßig größer)
als current_node_level then
        if bhrl = FALSE then
                Bestimme jenen ancestor node von node-i+1, dessen
                level gleich dem current_node_level ist. Hierzu
                navigieret man durch die Werte
NodeTable[k].AncestorNode
                beginnend mit k=node-i+1 bis man auf einen Knoten a
                trifft  mit
NodeTable[a].HierarchyLevel=current-node_level.
                Man ersetze link-i, welcher ein DownLink ist, durch
                den zugehörigen Logical-Group-Node Horizontal link
                (mit selbigem Aggregation token). Der reziproke
                Uplink j ist gleich LinkTable [link-i].MyUplink. Die
                Folge {LinkTable [j].InducedLink} wird durchnavi
                giert bis man auf eine j* trifft mit
                LinkTable [j*].InducedLink =0.
                j* ist die gesuchte Horizontale Kante.
                Ersetze node i+1 durch den ermittelten ancestor
                node a.
                bhrl:= TRUE;
        else
                Streiche link-i und node-i+1 aus der Folge.
        end
 else
        if bhrl= TRUE then
```

```
        Ersetze link-i durch jenen zugeordneten (induzier
        ten) Uplink oder aber
        Logical-Group-Node- horizontal link j*, welcher vom
        Level, gegeben durch current_node_level ,aus
        startet und hinführt zum node-i+1. D.h., die
        Folge {LinkTable [j].InducedLink} wird durchnavi^
        giert, beginnend bei j=link-i, bis man auf eine j*
        trifft mit LinkTable[j*].FromNode = i* , derart, daß
        NodeTable[i*].HierarchyLevel = current-node_level.
        Es wird node-i+1 unverändert in der Folge beibe
        halten.
        bhrl := FALSE;
    else
        Beibehalte link-i und node-i+1 unverändert in der
        Folge.
    end
    current_node_level := Level des node-i+1;
 end
 Next i;
```

Im Beispiel erhält man die Folge F3 bestehend aus n=4 Kanten und n+1=5 Knoten:
Node21, Link57, Node3, Link15, Node8, Link14, Node6, Link 21, Node 12
Aus der Folge F3 wird eine Folge F4 wie folgt gebildet:

```
 for i:= 1 step 1 to n-1 do
  if link-i = Uplink then
        Füge hinter link-i jenen ancestor node von Source Node S
        ein, der vom selben Level ist wie node-i+1. Füge wiede
        rum dahinter jenen horizontal link H, welcher dem link-i
        vermöge des identischen Aggregation Tokens zugeordnet
        ist. (Die RelationTbl wird durch LinkTable[j].Induced
        Link beginnend bei j₁ = link-i bis H mit LinkTable[j]
        .InducedLink=0 durchlaufen und H= jₑ gefunden).
    end
  next i;
```

Die Folge F4 lautet:
Node21, Link57, Node12, Link20, Node3, Link15, Node8, Link14, Node6, Link 21, Node12
Aus F4 wird eine Sequenz von DTLs gebildet, indem die Folge F3 hinter jedem Uplink zerstückelt wird. Die Knotennummern werden durch die diesbezüglichen Node IDs, sowie die Kantennulnmem durch die diesbezüglichen Port IDs ersetzt. Die Uplink-Erkennung geschieht vermöge LinkTable[j] .InducedLink ungleich 0:.

```
1.DTL:
( NodeTable[21] .NodeId , LinkTable[57] .PortId ),
          // Knoten in Atlanta von Netz A, Uplink U_{AB2}
2.DTL:
( NodeTable[12] .NodeId, LinkTable[20] .PortId, // Netz A, h_{AB2}
  NodeTable[3] .NodeId,   LinkTable[15] .PortId,// Netz B, h_{BC2}
  NodeTable[8] .NodeId,   LinkTable[14] .PortId,// Netz C, h_{BC1}
  NodeTable[6] .NodeId,   LinkTable[21] .PortId,// Netz B, h_{AB1}
  NodeTable[12] .NodeId,  0  )                  // Netz A
```

Die erhaltene Leitweginformation ist daraufhin in DTL Informationselemente (IE), getreu des PNNIv1.0 Signalling Protokolls, umzuformen.

DTL-stack Wiederauffüllung durch den Entry-Border-Vermittlungsknoten:

Wenn eine Verbindungsaufbaumeldung (SETUP Meldung) in einem Entry-Border-Vermittlungsknoten S' in einer neuen Peer Group eintrifft, so wird der empfangene DTL-stack wieder aufgefüllt, d.h. es wird ein Route-Abschnitt ermittelt und durch Leitweginformation (DTL) beschrieben. Dieser Route-Abschnitt entspricht jenem hierarchisch höherem Link (dies kann sowohl ein horizontaler Link, als auch ein Uplink sein), welcher vom Current Transit Pointer des stack-obersten DTLs referenziert wird. Er sei im folgenden als Link-to-D' bezeichnet.

Der Startpunkt des Route-Abschnitts ist S' selbst. Endpunkt des Route-Abschnitts ist der Knoten D', der wie folgt ermittelt wird.

Der dem Current Transit Pointer des stack-obersten DTLs nachfolgende Eintrag enthält die Node ID von D'. Falls es aber darin keinen nachfolgenden Eintrag gibt, so findet man diesen im stack-nächsttieferen DTL, nachfolgend zum diesbezüglichen Current Transit Pointer, usw.

Falls nicht einmal im stack-tiefsten DTL ein derartiger Nachfolgereintrag enthalten ist, so wird D' anhand eines Suchbegriffes festgestellt, den man dem Called Party Number Informationselement entnimmt.

S' durchsucht seine Topology Database, beginnend bei den hierarchisch niedrigsten Knoten, um jenen Zielknoten D' zu finden, der bezüglich des Suchbegriffs erreichbar ist. Falls die Zieladresse eine sogenannte ANYCAST Adresse ist, welche im allgemeinen auf mehrere Geräte/Server an unterschiedlichen Knoten paßt, wird bei der Bestimmung von D' auch ein Advertisement Scope eines Reachability Information PTSE überprüft.

Es sei j* die Kantennummer des Link-to-D', und i* die Knotennummer von D'.

Bestimmung von j* und i*:

Man durchsuche alle Kanten j und bestimmt j* für das die folgende Übereinstimmung-zutrifft:

NodeTable [ LinkTable [j].FromNode ].NodeId = Node ID, referenziert durch stack-obersten CTP UND LinkTable [j].PortId = Port ID, referenziert durch stack-obersten CTP, Die Knotennummer i* des Zielknotens D' ist damit LinkTable [j*].ToNode.

Reduktion des Topologiegraphen:

Sobald der Knoten S' den Knoten D' festgestellt hat, schließt er von dem ihm bekannten Topologiegraphen gewisse Knoten und Kanten aus (wie oben beschrieben).

Falls man im Anschluß an eine Nichterfüllen-der-Kommunikationsbedingung-Meldung (Crankback) einen weiteren Rerouting-Versuch unternimmt, so entfernt er auch all jene Knoten samt Berührungskanten, welche sich zuvor als blokkierend herausgestellt hatten.

Darüber hinaus aber gilt:

Es werden die Knoten samt Berührungskanten vom Hierarchielevel größer-gleich dem des Knotens D' entfernt, ausgenommen D' selbst sowie ausgenommen aller Uplinks, welche in D' enden und welche dasselbe Aggregation Token haben wie Link-to-D'. D.h., ausgenommen ist der Knoten i* sowie alle Kanten j für die gilt:

LinkTable [j].ToNode = i* UND

LinkTable [j].AggregationToken = LinkTable [j*].AggregationToken

Basierend auf dem so zustandegekommenen Topologiegraphen ermittelt man eine beste Route von S' nach D'( sprich von der Knotennummer, welche den simplen Knoten S' repräsentiert, nach i*) und leitet daraus DTL Informationselemente ab, wie oben beschrieben. Man füllt den DTL-stack in der SETUP-Meldung mit den so gewonnenen DTLs wieder auf, mit Ausnahme des zu allerletzt gewonnenen DTLs (dessen Inhalt ist im stack-zuoberst empfangenen DTL bereits mitenthalten).

3. Ausführungsbeispiel (Verbund von Schmalbandnetzen) :

Ein drittes Ausführungsbeispiel (siehe Figuren 9 bis 14) betrifft ein Konsortium mehrerer Schmalband-Netzbetreiber A, B, C, die ihre Netze zu einem Kommunikationsnetz verbunden haben (siehe Fig. 9). Jedes einzelne Teilnetz ist für sich genommen eine, hierarchisch niedrigste, Peer Group. Darüber existiert genau eine, gemeinschaftliche, hierarchisch höhere Peer Group, in welcher jedes Teilnetz als ein logischer Knoten vertreten ist.

Der Sinn dieses Konzepts besteht darin, daß die Vermittlungsknoten eines bestimmten Teilnetzes nur die eigene Netz-Topologie exakt kennen müssen. Bezüglich der übrigen Teilnetze kennen sie nur die "grobe" Vernetzungstopologie des Kommunikationsnetzes, sprich die Art und Weise wie sie wechselseitig vernetzt sind.

Erreichbarkeit: Jeder Vermittlungsknoten eines bestimmten Teilnetzes kennt von jedem Knoten des eigenen Teilnetzes, welche Endgeräte (Rufnummern) an diesen angeschlossen sind. Er kennt ferner von jedem fremden Teiletz - mittels summarisierten Einträgen, welche Endgeräte (Rufnummern) an diesem angeschlossen sind.

Drei verschiedene Netzbetreiber A, B und C verbinden ihre Teilnetze wechselseitig mit physikalischen Leitungen (p):

    in der Stadt Dresden (DD) :    A mit C, sowie B mit C,
    in der Stadt Hamburg (HH) :    B mit C,
    in der Stadt München (M) :    A mit B,
    in der Stadt Köln (K) :    A mit B sowie B mit C.

Die gepunktete Linie in Fig. 9 bezeichnet den physikalen Verlauf eines erst zu ermittelnden Leitweges, beginnend im Ursprungs-Vermittlungsknoten (München) des Teilnetzes A und endend im Ziel-Vermittlungsknoten (Stuttgart), gleichfalls des Netzes A.

Analog zum PNNI-Konzepts ist jedes der Teilnetze A, B, C als komplexer logischer Knoten darstellbar, d.h. bestehend aus einem fiktiven Nukleus im Zentrum eines Großkreises, aus Ports am Rande eines Großkreises, aus Port-Nukleus-Verbindungsleitungen (Spokes), aus Port-Port-Verbindungsleitungen (bypass exceptions) (siehe Fig. 5).

Im Ursprungs-Vermittlungsknoten bzw. der das Bilden der Leitweginformation vornehmenden Einrichtung ist folgener Graph G1, ein sogenannter High-level Graph (HL) (siehe Fig. 6) gespeichert:

    Kante HL-1 : Knoten HL-1 -Knoten HL-2
    Kante HL-2 : Knoten HL-1 -Knoten HL-3
    Kante HL-3 : Knoten HL-1 -Knoten HL-4
    Kante HL-4 : Knoten HL-1 -Knoten HL-5
    Kante HL-5 : Knoten HL-1 -Knoten HL-6
    Kante HL-6 : Knoten HL-1 -Knoten HL-5
    Kante HL-7 : Knoten HL-2 -Knoten HL-6
    Kante HL-8 : Knoten HL-2 -Knoten HL-11
    Kante HL-9 : Knoten HL-3 -Knoten HL-10
    Kante HL-10 : Knoten HL-4 -Knoten HL-9
    Kante HL-11 : Knoten HL-5 -Knoten HL-14
    Kante HL-12 : Knoten HL-6 -Knoten HL-15
    Kante HL-13 : Knoten HL-7 -Knoten HL-11
    Kante HL-14 : Knoten HL-7 -Knoten HL-10
    Kante HL-15 : Knoten HL-7 -Knoten HL-9
    Kante HL-16 : Knoten HL-7 -Knoten HL-8
    Kante HL-17 : Knoten HL-8 -Knoten HL-9
    Kante HL-18 : Knoten HL-8 -Knoten HL-13
    Kante HL-19 : Knoten HL-12 -Knoten HL-13
    Kante HL-20 : Knoten HL-12 -Knoten HL-14
    Kante HL-21 : Knoten HL-12 -Knoten HL-15

die Identifizierung der Verbindungsleitungen (Links, Kanten) erfolgt von kleiner Knotennummer zu größerer Knotennummer.

Dieser Graph G1 ist den Vermittlungsknoten der beteiligten Teilnetze gleichermaßen einzugeben. Jeder Nukleus-Knoten, jeder Port-Knoten sowie jede Kante erhält somit eine eindeutige Nummer. Diese Nummer ermöglicht es, daß jeder

Vermittlungsknoten unter der diesbezüglichen Knotennummer bzw. Kantennummer dasselbe versteht.

Jeder Vermittlungsknoten erhält eine Markierung, hinsichtlich Nukleus oder Port, jede Kante eine Markierung der Form "spoke", "bypass exception", oder aber "horizontal". Ferner erhält jeder Vermittlungsknoten seine geografischen Koordinaten. Jeder Nukleus-Knoten erhält in geeigneter summarisierter Form Angaben, welche Endgeräte interne Teilnehmer dieses Teilnetzes sind. Jeder Vermittlungsknoten und jede Kante erhält eine high-level Markierung HL.

Parallel dazu erhält jeder Vermittlungsknoten eines ganz bestimmten Teiletzes einen Topologiegraph G2 (Low-level Graph LL) dieses bestimmten Teiletzes, z.B. jeder Vermittlungsknoten des Teilnetzes A den folgenden Topologiegraphen (siehe Fig. 12) :

    Kante LL-1 : Knoten LL-1 -Knoten LL-2
    Kante LL-2 : Knoten LL-1 -Knoten LL-4
    Kante LL-3 : Knoten LL-1 -Knoten LL-5
    Kante LL-4 : Knoten LL-2 -Knoten LL-3
    Kante LL-5 : Knoten LL-3 -Knoten LL-4
    Kante LL-6 : Knoten LL-4 -Knoten LL-5
    Kante LL-7 : Knoten LL-4 -Knoten LL-6
    Kante LL-8 : Knoten LL-6 -Knoten LL-7
    Kante LL-9 : Knoten LL-6 -Knoten LL-8
    Kante LL-10 : Knoten LL-7 -Knoten LL-8
    Kante LL-11 : Knoten LL-7 -Knoten LL-9
    Kante LL-12 : Knoten LL-8 -Knoten LL-9

Die Identifizierung der Kanten erfolgt von kleiner Knotennummer zu größerer Knotennummer. Jeder Vermittlungsknoten und jede Kante ist markiert mit "low-level"= LL.

Den high-level Graph und den low-level Graph vereinigt der Ursprungs-Vermittlungsknoten, indem er die eigenen high-level Portknoten, den eigenen high-level Mukleus-Knoten im Graphen, sowie die eigenen Spoke- und bypass exception-Kanten löscht. Dagegen werden die horizontalen Kanten, welche von diesen eigenen Portknoten aus wegführen derart modifiziert, daß sie nunmehr von den Vermittlungsknoten gemäß des low-level Graphs wegführen. Sie bleiben weiterhin als HL markiert.

Jeder Port eines bestimmten Teilnetzes verfügt über Topologieinformation darüber, welche HL-Knoten das eigene Teilnetz repräsentieren. Jeder Port kennt ferner bzgl. der HL-Portknoten des eigenen Teiletzes die jeweils zugeordneten LL-Knoten.

Der derart vereinigte Graph G3 lautet:

    Kante HL-1 : Knoten HL-1 -Knoten HL-2
    Kante HL-2 : Knoten HL-1 -Knoten HL-3
    Kante HL-3 : Knoten HL-1 -Knoten HL-4
    Kante HL-4 : Knoten HL-1 -Knoten HL-5
    Kante HL-5 : Knoten HL-1 -Knoten HL-6
    Kante HL-6 : Knoten HL-1 -Knoten HL-5
    Kante HL-7 : Knoten HL-2 -Knoten HL-6
    Kante HL-8 : Knoten HL-2 -Knoten HL-11
    Kante HL-9 : Knoten HL-3 -Knoten HL-10
    Kante HL-10 : Knoten HL-4 -Knoten HL-9
    Kante HL-11 : Knoten HL-5 -Knoten LL-6
    Kante HL-12 : Knoten HL-6 -Knoten LL-1
    Kante HL-13 : Knoten HL-7 -Knoten HL-11
    Kante HL-14 : Knoten HL-7 -Knoten HL-10
    Kante HL-15 : Knoten HL-7 -Knoten HL-9
    Kante HL-16 : Knoten HL-7 -Knoten HL-8
    Kante HL-17 : Knoten HL-8 -Knoten HL-9
    Kante HL-18 : Knoten HL-8 -Knoten LL-9
    Kante LL-1 : Knoten LL-1 -Knoten LL-2
    Kante LL-2 : Knoten LL-1 -Knoten LL-4
    Kante LL-3 : Knoten LL-1 -Knoten LL-5
    Kante LL-4 : Knoten LL-2 -Knoten LL-3

Kante LL-5 : Knoten LL-3 -Knoten LL-4
Kante LL-6 : Knoten LL-4 -Knoten LL-5
Kante LL-7 : Knoten LL-4 -Knoten LL-6
Kante LL-8 : Knoten LL-6 -Knoten LL-7
Kante LL-9 : Knoten LL-6 -Knoten LL-8
Kante LL-10 : Knoten LL-7 -Knoten LL-8
Kante LL-11 : Knoten LL-7 -Knoten LL-9
Kante LL-12 : Knoten LL-8 -Knoten LL-9

Basierend auf diesem Topologiegraphen G3 tätigt der jeweilige Ursprungs-Vermittlungsknoten des Teilnetzes A eine Dijkstra-Best-Route-Berechnung und erhält eine Knoten-Kante-Knoten-Folge, im Beispiel beginnend beim Ursprungs-Vermittlungsknoten (München) und endend beim vorgegebenen Ziel-Vermittlungsknoten (Stuttgart).

München=Kn.LL-9, Ka.HL-11, Kn.HL-5, Ka.HL-4, Kn.HL-1, Ka.HL-3, Kn.HL-3, Ka.HL-9, Kn.HL-10, Ka.HL-14, Kn.HL-7, Ka.HL-13, Kn.HL-11, Ka.HL-8, Kn.HL-2, Ka.HL-7, Kn.HL-6, Ka.HL-5, Kn.LL-1, Ka.LL-1, Kn.LL-2=Stuttgart. (siehe Fig. 13)

Die ermittelte Knoten-Kanten-Knoten-Folge wird einer Verbindungsaufbaumeldung mittels eines einzigen Informationselementes mitgegeben. Bevor diese verbindungsaufbaumeldung zum ersten Mal abgeschickt wird, wird dieses Informationselement ausgewertet und abgearbeitet. Dabei wird der erste Knoten (=Ursprungs-Vermittlungsknoten) gelöscht. Die erste Kante wird ausgewertet um die richtige Trunkleitung zum nächsten Vermittlungsknoten zu ermitteln. Daraufhin wird diese Kante ebenfalls im Informationselement gelöscht. Die "alte", d.h. bereits ausgewertete Information, wird somit weggeschnitten.

Falls die Verbindungsaufbaumeldung bei einem Vermittlungsknoten ankommt, wobei der oberste Knoten des Informationselementes ein HL-Knoten (HL-Portknoten) ist, so muß der empfangende Vermittlungsknoten einen Leitweg-Abschnitt (in welchem ausschließlich LL-Knoten vorkommen) durch das momentan erreichte Teilnetz berechnen, die entsprechende Knoten-Kanten-Folge in das Leitweg-Informationselement aufnehmen und den Verbindungsaufbau dementsprechend vorantreiben.

Fall A

Der oberste Knoten ist eine LL-Knotennummer (die des empfangenden Vermittlungsknotens). Falls keine Kantennummer empfangen wurde, ist der Ziel-Vermittlungsknoten erreicht. Andernfalls wird der Verbindungsaufbauwunsch über die zuoberst angetroffene Kante weitergeschickt. Zuvor aber wird die oberste Knoten- und oberste Kantennummer weggeschnitten.

Fall B:

Der oberste Knoten ist eine HL-Knotennummer (und zwar eine HL- Portknotennummer). Diese kann auf die LL-Knotennummer des empfangenden Vermittlungsknotens umgeschrieben werden. Es wird geprüft, ob das momentan erreichte Teilnetz wieder zu verlassen ist - entweder sofort oder nach Durchquerung des eigenen Teilnetzes. Das Teilnetz wird wieder verlassen, wenn man beim Durchsuchen des empfangenen Leitweg-Informationselementes (von oben nach unten) entweder auf einen LL-Knoten trifft oder auf einen HL-(Port)-Knoten eines fremden Netzes. Das Teilnetz wird dabei sofort verlassen, wenn als zweitoberste Knotennummer entweder ein Teilnetz-fremder HL-Knoten oder ein LL-Knoten (der einem fremden Teilnetz angehört) vorliegt.

Fall B.1 : Das Netz kann nicht wieder zu verlassen werden. Der gesamte Inhalt des empfangenen Leitweg-Informationselements wird entfernt. Aufgrund eines empfangenen "Called Party Number" - Informationselementes gerufenen Endgerätes wird der LL-Zielknoten bestimmt. Man berechnet einen besten Leitweg dorthin und fügt die ermittelte Knoten-Kanten-Knoten-Folge in das Leitweg-Informationselement - mit Ausnahme des allerersten Knotens und der allerersten Kante - ein.

Fall B.2.1 Das Teilnetz ist sofort wieder zu verlassen. Es wird der Verbindungsaufbauwunsch über die zuoberst vorgefundene Kante weitergeleitet, jedoch wird zuvor der oberste Knoten und eben diese oberste Kante weggeschnitten.

Fall B.2.2 Das Teilnetz ist nach Durchquerung wieder zu verlassen. Beim Durchsuchen von oben nach unten wird im Leitweg-Informationselement der letzte HL-Knoten, der zum eigenen Netz gehört (HL-Exit-Portknoten) gefunden. Es wird dieser auf den diesbezüglichen LL-Knoten (LL-Exit-Knoten) umgeschrieben und ein bester Leitweg zu diesem Vermittlungsknoten berechnet. Vom empfangenen Leitweg-Informationselement werden die obersten Einträge inklusive den des HL-Exit-Portknotens gelöscht. Man berechnet einen besten Leitweg beginnend beim momentanen Vermittlungsknoten und endend beim LL-Exitknoten und fügt die diesbezügliche Knoten-Kanten-Knoten-Folge zuoberst in das Leitweg-Informationselement ein (wobei man natürlich den Startknoten und die Startkante wegläßt) und leitet die Verbindungsaufbaumeldung über die weggelassene Startkante weiter.

Bei diesem Verfahren zur Leitweginformationsbildung wird in Richtung des Verbindungsaufbaus ein Teilnetz (hier Teilnetz A) verlassen und später wieder bei einem anderen Port beginnend betreten.

Führt man zuzüglich zu dem geschilderten Leitweg-Informationselement ein Informationselement (Crankback; ähnlich wie bei PMNIv1.0) zur Unterbrechungsanzeige ein, welches in einer RELEASE-Meldung der Unterbrechung mitgeführt wird, um einen blockierenden Knoten zu melden, so kann man ein gezieltes Rerouting initiieren, bei dem garantiert wird, daß der blockierende Knoten nicht noch einmal aufgesucht wird

Der blockierenden LL-Knoten wird gemeldet. Die RELEASE-Meldung wird zurückgeschickt bis zum Ursprungs-Vermittlungsknoten oder aber zum Eintrittsknoten im Teiletz des blockierenden Knotens. Dort wird der Dijkstra-Algorithmus erneut ausgeführt, basierend auf einem Topologiegraphen bei dem der blockierende Knoten samt Berührungskanten entfernt worden sind.

Eventuell wird dies mehrfach wiederholt, d.h. bei jeder weiteren Blockade wird per RELEASE-Meldung zum Knoten zurückgemeldet, dann aber bei der nächsten Leitwegermittlung ein Topologiegraph zugrundegelegt, bei dem sämtliche zuvor gemeldeten blockierenden Knoten samt Berührungskanten entfernt sind.

Sollten alle (eine begrenzte Anzahl) diese Rerouting-Versuche scheitern, könnte per RELEASE-Meldung zum Vorgängernetz zurückvermittelt werden, wobei das Crankback-Infozinationselement einen HL-(Nucleus)-Knoten enthält. Im vorgängemetz sollte die RELEASE-Meldung bis zum Eintrittsknoten zurückgeschickt werden. Erst dort sollte der Dijkstra-Algorithmus erneut ausgeführt werden, wobei im Topologiegraph zuvor der gemeldete blockierende HL-Nucleus-Knoten samt allen zugehörigen HL-Portknoten entfernt werden, um zu erreichen, daß das blockierende Netz beim nächsten Versuch gänzlich gemieden wird.

Bei der Bestimmung des Leitweges wird auf die geografischen Koordinaten der (LL- und HL-) Knoten zurückgegriffen, die bekannt sind. Der durch den Dijkstra-Algorithmus gefunden Leitweg ist eine Route mit den kürzesten geografischen Entfernungen. Die geografischen Entfernungen lassen sich auf Tarifzonen abbilden, so daß bei einer kurzen Entfernung für den Verbindungsaufbau eine Kostenverringerung auftritt. Bei der Leitwegermittlung ist es gleichgültig, ob der Zielteilnehmer im Konmunikationsnetz selbst angeschlossen ist oder bis zu einem Übergang zu einem benachbarten Teilnetz außerhalb des Kommunikationsnetzes vermittelt werden soll.

**Patentansprüche**

1. Verfahren zum Bilden von Leitweginformation für einen einstellbaren Kommunikationsbedingungen genügenden Verbindungsaufbau von einem Ursprungs-Vermittlungsknoten zu einem Ziel-Vermittlungsknoten,
   in einem aus mindestens zwei Teilnetzen mit Vermittlungsknoten und diese verbindenden Verbindungsleitungen bestehenden Kommunikationsnetz,
   wobei Teilnetze über Verbindungsleitungen miteinander verbunden sind und für den Ursprungs-Vermittlungsknoten Topologieinformationen über das Teilnetz, dem er angehört, und zumindest über die Vernetzung der Teilnetze verfügbar gespeichert sind,
   mit den folgenden Verfahrensschritten:

   - Auswählen einer Teilmenge der den Kommrinikationsbedingungen genügenden Vermittlungsknoten und Verbindungsleitungen, deren Topologieinformationen im Ursprungs-Vermittlungsknoten gespeichert ist,
   - Ermitteln eines Leitwegs unter Verwendung von Elementen dieser Teilmenge, der in Richtung vom Ursprungs- zum Ziel-Vermittlungsknoten mindestens ein Teilnetz einmal verläßt und wieder in dieses Teilnetz zurückkehrt, und
   - Bilden von Leitweginformation aus dem ermittelten Leitweg.

2. Verfahren nach Anspruch 1,
   aufbauend auf hierarchisch organisierte Vermittlungsknoten, die durch logische Knoten verschiedener Ordnung repräsentiert werden, bei dem der Leitweg unter Ausschluss von Teilen der Hierachie ermittelt wird.

3. Verfahren nach einem der vorhergehenden Ansprüche,
   bei dem im Ursprungs-Vermittlungsknoten aus den Topologieinformationen das Teilnetz bestimmt wird, das den Ziel-Vermittlungsknoten enthält.

4. Verfahren nach einem der vorhergehenden Ansprüche,
   mit einem Leitwegermitteln und Leitwegbeschreiben nach den Prinzipien des Privaten-Netzwerk-Knoten-Protokolls (PNNI).

**5.** Verfahren nach Anspruch 4,
aufbauend auf Topologieinformationen, bei denen zumindest ein Teilnetz durch einen komplexen Vermittlungsknoten repräsentiert ist.

**6.** Verfahren nach Anspruch 5,
bei dem ein komplexer Vermittlungsknoten durch zumindest einen Port-Knoten, einen Nukleus-Knoten, sowie
Port-Nukleus-Verbindungsleitungen und Port-Port-Verbindungsleitungen definiert ist.

**7.** Verfahren nach Anspruch 6,
mit einem Entfernen der Verbindungsleitungen bezüglich Port-Nukleus-Verbindungen und Port-Port-Verbindungen
beim Bilden der Leitweginformation.

**8.** Verfahren nach einem der vorhergehenden Ansprüche,
mit einem unabhängigen Behandeln der Verbindungsleitungen zwischen zwei Vermittlungsknoten in beide Verkehrsrichtungen.

**9.** Verfahren nach einem der vorhergehenden Ansprüche,
mit einem Ermitteln des Leitwegs nach dem Dijkstra-Algorithmus.

**10.** Verfahren nach einem der vorhergehenden Ansprüche, bei
dem bei Nichterfüllen der Kommunikationsbedingungen für einen bereits ermittelten Leitweg der betreffende Vermittlungsknoten bzw. die betreffende Verbindungsleitung dem Urspungs-Vermittlungsknoten gemeldet werden.


**Claims**

**1.** Method for forming routing information for a connection set-up, satisfying adjustable communications conditions,
from a source switching node to a destination switching node, in a communications network comprising at least
two subnetworks with switching nodes and connecting lines which connect the latter, subnetworks being connected
to one another via connecting lines and topology information on the subnetwork to which the source switching
node belongs, and at least on the interconnection of the subnetworks being stored so as to be available for said
source switching node, having the following method steps:

- Selection of a subset of the switching nodes and connecting lines which satisfies the communications conditions and whose topology information is stored in the source switching node,
- Determination of a route using elements of this set, which, in the direction from the source switching node to
the destination switching node, leaves at least one subnetwork once and returns to said subnetwork, and
- Formation of routing information from the route which has been determined.

**2.** Method according to Claim 1, based on hierarchically organized switching nodes which are represented by means
of logical nodes of different orders, in which method the route is determined with the exclusion of parts of the
hierarchy.

**3.** Method according to one of the preceding claims, in which the subnetwork which contains the destination switching
node is determined in the source switching node from the topology information.

**4.** Method according to one of the preceding claims, comprising the determination of a route and the description of
a route in accordance with the principles of the Private Network Node Protocol (PNNI).

**5.** Method according to Claim 4, based on topology information in which at least one subnetwork is represented by
a complex switching node.

**6.** Method according to Claim 5, in which a complex switching node is defined by means of at least one port node,
a nucleus node, port-nucleus connecting lines and port-port connecting lines.

**7.** Method according to Claim 6, comprising the removal of the connecting lines relating to port-nucleus links and
port-port links during the formation of the routing information.

**8.** Method according to one of the preceding claims, comprising independent handling of the connecting lines between two switching nodes in both traffic directions.

**9.** Method according to one of the preceding claims, comprising the determination of the route according to the Dijkstra algorithm.

**10.** Method according to one of the preceding claims, in which when the communications conditions for a route which has already been determined are not fulfilled, the respective switching node and/or the respective connecting line are signalled to the source switching node.


**Revendications**

**1.** Procédé pour établir des informations d'acheminement en vue de l'établissement, au départ d'un noeud de commutation source vers un noeud de commutation de destination, d'une connexion satisfaisant à des conditions de communication variables, dans un réseau de communication composé d'au moins deux sous-réseaux comprenant des noeuds de commutation et des lignes de connexion les reliant, lesdits sous-réseaux étant interconnectés par l'intermédiaire de lignes de connexion et des informations topologiques disponibles pour le noeud de commutation source étant mises en mémoire, ces informations étant relatives au sous-réseau dont ledit noeud fait partie et au moins à l'interconnexion des sous-réseaux, comprenant les étapes suivantes:

- sélection d'un sous-ensemble des noeuds de commutation satisfaisant aux conditions de communication ainsi que des lignes de connexion dont les informations topologiques sont mises en mémoire dans le noeud de commutation source,
- détermination d'une voie d'acheminement en utilisant des éléments dudit sous-ensemble, laquelle quitte au moins un sous-réseau une fois dans le sens allant du noeud source au noeud de commutation de destination et revient dans ledit sous-réseau et
- établissement d'informations d'acheminement au départ de la voie d'acheminement qui a été déterminée.

**2.** Procédé selon la revendication 1, se fondant sur des noeuds de commutation organisés hiérarchiquement et représentés par des noeuds logiques d'ordre différent, dans lequel la détermination de la voie d'acheminement implique l'exclusion de parties de la hiérarchie.

**3.** Procédé selon l'une des revendications précédentes, dans lequel le sous-réseau comprenant le noeud de commutation de destination est déterminé dans le noeud de commutation source au départ des informations topologiques.

**4.** Procédé selon l'une des revendications précédentes, comprenant une détermination des voies d'acheminement et une description des voies d'acheminement selon les principes de protocole PNNI (Private Network-to-Node Interface).

**5.** Procédé selon la revendication 4, se fondant sur des informations topologiques dans lesquelles au moins un sous-réseau est représenté par un noeud de commutation complexe.

**6.** Procédé selon la revendication 5, dans lequel un noeud de commutation complexe est défini par au moins un noeud port, un noeud noyau et des lignes de connexion noyau-port ainsi que des lignes de connexion port-port.

**7.** Procédé selon la revendication 6, comprenant la suppression des lignes de connexion concernant les connexions port-noyau et port-port lors de l'établissement des informations d'acheminement.

**8.** Procédé selon l'une des revendications précédentes, comprenant un traitement indépendant des lignes de connexion entre deux noeuds de commutation dans les deux sens du trafic.

9. Procédé selon l'une des revendications précédentes,
dans lequel la voie d'acheminement est déterminée selon l'algorithme de Dijkstra.

10. Procédé selon l'une des revendications précédentes,
dans lequel en cas de non-satisfaction des conditions de communication pour une voie d'acheminement déjà déterminée le noeud de commutation concerné respectivement la ligne de connexion concernée sont signalés au noeud de commutation source.

FIG 1

EP 0 872 090 B1

FIG 2

FIG 3

FIG 4

Chicago

NY

L.A

Atlanta

C

P_BC1

P_BC2

P_BC3

Chicago

L.A

Atlanta

NY

B

P_AB1

P_AB2

P_AC1

Chicago

L.A

NY

Las Vegas

A

Source=Atlanta

EP 0 872 090 B1

## FIG 5

## FIG 6

# FIG 7

Link#: from-node#-to-node#

1:1-2;2:2-1;3:1-3;4:4-3;
5:1-4;6:4-1;7:1-5;8:5-1;
9:1-6;10:6-1;11:2-6;12:6-2;
13:2-8;14:8-2;15:3-9;16:9-3;
17:4-10;18:10-4;19:5-14;20:14-5;
21:6-15;22:15-6;
13:7-8;24:8-7;25:7-9;26:9-7;
27:7-10;28:10-7;29:7-11;30:11-7;
31:10-11;32:11-10;33:11-13;34:13-11;
35:12-13;36:13-12;37:12-14;38:14-12;
39:12-15;40:15-12;

41:16-6;42:6-16;43:16-20;44:20-16;
45:16-19;46:19-16;47:16-17;48:17-16;
49:17-18;50:18-17;51:18-19;52:19-18;
53:19-20;54:20-19;55:19-21;56:21-19;
57:21-5;58:5-21;59:21-22;60:22-21;
61:21-23;62:23-21;63:21-23;64:23-22;
65:22-24;66:24-22;67:24-11;68:11-24;

# FIG 8

FIG 9

EP 0 872 090 B1

## FIG 10

LA
C
hBC1    Ch    NY    hAC1
hBC2
Ch    NY    Port
LA    NY    Spoke
hBC3    bypass    Atl
exception    Nucleus
Atl    NY
B    LA    hAB2    hAB1    LA    A

## FIG 11

LA    C
hBC1    Ch    NY
hBC2
Ch    NY
LA    hAC1
NY
hBC3    Atl
NY    Atl
B    LA    hAB2    hAB1    LA    A
UAB1    uplink
UAC1
UAB2
Chicago    NY
L.A.
A
Source=Atlanta
Dest=Las Vegas

## FIG 12

# FIG 13